# EUROPEAN PATENT APPLICATION

(11) **EP 1 967 885 A1**
(43) Date of publication of application: **10.09.2008**
(21) Application number: 06843705.2
(22) Date of filing: 26.12.2006
(51) Int. Cl.: G02B 21/00, C12M 1/34, C12Q 1/02, G01N 21/76, G01N 33/68

(54) **APPARATUS FOR MEASURING LUMINESCENCE DOSE AND METHOD OF MEASURING LUMINESCENCE**

(30) Priority: 27.12.2005 JP 2005376163; 28.12.2005 JP 2005380450
(71) Applicant: Olympus Corporation, Tokyo 151-0072 (JP)
(72) Inventor: SUZUKI, Hirobumi, Tokyo 151-0072 (JP); OHASHI, Yoko, Tokyo 151-0072 (JP); SATO, Chiaki, Tokyo 151-0072 (JP); FUKUOKA, Morinao, Tokyo 151-0072 (JP); NAMBA, Akihiro, Tokyo 151-0072 (JP)
(74) Representative: von Hellfeld, Axel
(86) International application number: PCT/JP2006/326332
(87) International publication number: WO 2007/074923

(57) **Abstract**

There is provided a novel luminescence measuring apparatus that enables measuring a luminescence amount or a luminescence intensity from plural living biological samples, such as tissues, cells, and biological individuals, into which a gene expressing a luminescent protein has been introduced, individually for the respective biological samples. The inventive luminescence measuring apparatus comprises an image acquisition portion that acquires a luminescence image of biological samples; a measurement region determination portion that determines at least one measurement region in the luminescence image; and a luminescence measurement portion that measures the luminescence amount or luminescence intensity in the determined measurement region; thereby measuring the luminescence amount or luminescence intensity individually by the biological sample(s) included in the measurement region. Irrespective of an efficiency of transfer of a luminescent protein gene into a cell, etc., it becomes possible to execute a luminescence measurement successfully while observing only biological samples having a gene expression.

## Description

### Technical field

The present inventions relate to a luminescence measuring apparatus for measuring a luminescence amount and/or a luminescence intensity from a living biological sample into which a gene expressing a luminescent protein (hereafter, called as a "luminescent protein gene") has been introduced and a luminescence measuring method for measuring the luminescence amount and/or luminescence intensity of such a biological sample, or to an apparatus and a method that perform a measurement of a luminescence amount and/or a luminescence intensity as described above by microscopy.

### Background art

In the field of the life science research and pharmaceutical development, often, a detection of an expression of a certain specific gene in a certain cell and/or a measurement of its expression amount are carried out. For instance, in the pharmaceutical development, a series of processes, such as (a) the development and optimization of an assay effectively useful in the identification and detection of a specific disease target molecule, (b) the identification of hit compounds and lead compounds in a chemical compound library through the screening thereof by the developed assay, (c) the determination of a seed compound having a validity in metabolism and/or in safety among the hit compounds or lead compounds and being tried to be used as a pharmaceutical, are carries out as steps preceding a clinical test. In the compound screening of the processes above, in addition to a biochemical assay, an expression amount of an arbitrary gene in a living organism upon the addition of a certain chemical compound is measured for the purpose of investigating the effects and influences of the compound on the living organism and testing the validity of the compound in a biological system including living cells, and the results of these are used as one of information about the compound. In general, an expression amount of a gene varies every moment in accordance with environmental conditions and/or others, and therefore a variation with time of a gene expression amount is also measured in the measurement of the gene expression with the addition of a compound.

In the past, the presence and absence of an expression of an intracellular gene and/or the change with time of the gene expression amount have been measured by Northern blotting, Western blotting, RT-PCR techniques, etc. However, in those classic methods, treatment of cells by an arbitrary method is required for the measurement of a gene expression amount, and a variation with time of a gene expression amount in one identical cell can not be followed, and further, an experimenter is bound for a long time (he needs to carry out a treatment of cells at every certain time), and operations in those processes are complicated. Then, recently, it has been tried to pursue the change with time of a gene expression amount in one identical cell by "Reporter assay" using a cell into which a luminescent protein gene has been introduced such that a luminescent protein expresses while involving with an expression of an arbitrary specific protein, e.g., a luminescent protein can express while fusing with an arbitrary protein (For instance, see Sambrook, Russell (2001), Molecular cloning. A laboratory manual, Third edition. Chapter 17, Analysis of gene expression in cultured mammalian cells: 17.1-17.112.).

In the so-called Reporter assay, a gene is prepared by connecting a gene that codes for Luciferase, one of luminescent proteins (hereafter, called as a "luciferase gene") to a gene of a protein to be observed or to a gene involved therewith, and the resultant gene is introduced into a cell to be tested. Then, when the luciferase expresses together with the expression of the protein to be observed, the luciferase reacts with the luciferin to emit light (Bioluminescence phenomenon), and therefore, by using the luciferase as a reporter molecule for the expression of the protein to be observed and detecting the light emitted from the luciferase, the expression of the protein to be observed will be detectable. Moreover, the measurement of the amount or strength of expression of the protein to be observed becomes possible by measuring the luminescence amount from the luciferin-luciferase reaction.

In a "reporter assay" generally performed in a compound screening process for a pharmaceutical development process, for example, the measurement of the strength of an expression of a luciferase gene (i.e., a gene of a protein attached with the luciferase gene) at a certain time is accomplished by reacting a cell dissolving solution obtained by dissolving cells in which the luciferase has been expressed with a substrate solution containing luciferin, ATP, magnesium, etc., and subsequently measuring the luminescence amount from the cell dissolving solution having been reacted with the substrate solution by means of a luminescence meter employing a photomultiplier tube, and thereby enabling the measurement of the average of the expression amount of the luciferase gene, i.e., the expression amount of the protein to be observed in the whole cell population. Further, for temporally obtaining the expression amount of a luciferase gene, an incubator for cells into which the luciferase gene has been introduced is equipped with a luminescence meter, so that the luminescence amount from the incubated whole cell population can be measured with the luminescence meter on every determined time. Then, with reference to the luminescence intensity detected with the luminescence meter, an expression rhythm with a certain periodicity, etc. can be measured, thereby enabling the capturing of the time variation of the expression amount of the luminescence related gene (luciferase gene) in the whole cell population.

Further, it has been also tried to detect a gene expression in a cell through the imaging with light emitted from luminescent proteins, such as a luciferase, under an optical microscope. As an example of such an imaging technique employing luminescent proteins, Rutter et al. observed that MAP kinase is involved in Insulin signal transfer by the imaging of luciferase gene expressions in a single living cell using a photon counting camera (Rutter, White, Tavare (1995) "Involvement of MAP kinase in insulin signalling revealed by non-invasive imaging of luciferase gene expression in single living cells. Current biology Vol. 5: 890-899.). Sternberg et al. also reported the detection of bioluminescence using a photon counting camera and a cooled CCD camera (Sternberg, Eberl, Kongsbak, Molin (1997), "Detection of bioluminescence from individual bacterial cells: a comparison of two different low-light imaging system. J. Bioluminescence and Chemiluminescence Vol. 12: 7-13.). Further, Takasuka et al. reported that the dynamic change in a prolactin promoter's activation was observed by the imaging of luciferase gene expression in a single living cell with a photon counting camera (Takasuka, White, Wood, Robertson, Davis (1998), "Dynamic changes in prolactin promoter activation in individual living lactotrophic cells.", Endocrinology viol.139: 1361-1368.).

By the way, in a reporter assay using a luminescent protein as described above, a luminescent protein gene is introduced into a cell and expressed in the cell, but, in general, the efficiencies of the gene introduction and gene expression vary with individual cells. Inherently, in the gene introduction technique, genes are not certainly introduced into all cells, and, even in the cells into which the gene has been introduced, the gene expression does not always occur in successful (at the right time when it should occur). For instance, even in cloned cultured cells, such as HeLa cell, a response to a reagent through a receptor on a cell membrane surface may vary with individual cells. Thus, for an accurate measurement of the presence or absence of a gene expression and its variation with time in a reporter assay, it is preferable that a luminescence amount and/or a luminescence intensity for each cell can be measured individually. However, in a method of measuring a luminescence amount of luminescent protein by means of luminescence meter, employed in the process of a compound screening for a pharmaceutical development, the measured luminescence amount is the luminescence amount from the whole cell population, and accordingly, the request for measuring luminescence amounts and/or luminescence intensities of individual cells could not be achieved.

To measure a luminescence amount and a luminescence intensity in an individual cell may be achieved in the imaging of luminescence phenomena occurring in cells using an optical microscope as exemplified above: by measuring an luminescence amount and/or a luminescence intensity in each cell under the optical microscope. However, at present, the imaging of luminescence phenomena is carried out only in laboratories in manners specialized in the respective researches therein, and thus, for instance, there has not been established yet an apparatus or a method quickly and readily enabling a detection of an expression of a certain specific gene and a measurement of its expression amount desired in a compound screening in a pharmaceutical development process. Actually, it has been possible to detect feeble luminescence by using a detection element having a super-high sensitivity. In this case, however, the acquirable images are only mosaic images, and therefore it is difficult to carry out a detailed analysis while defining an area whose luminescence amount is to be measured.

### Disclosure of Inventions

Thus, one of the objects of the present inventions is to provide an apparatus or a method of performing a luminescence measurement in which a luminescence amount in a cell is measured, and processing the resultant information in a manner suitable for performing the above-mentioned reporter assay using bioluminescence phenomenon, in which a luminescence amount in an individual living cell and/or its variation with time are measured by using luminescence images of the living cell and/or other biological samples obtained with an optical microscope, etc.

Another object of the present inventions is to provide such an apparatus and/or a method which readily enables a detection of an expression of a certain specific gene and a measurement of its expression amount to be performed in a compound screening during a pharmaceutical development process, etc.

Further object of the present invention is to provide a computer program making such an apparatus and/or a method realized in an arbitrary computer.

According to the present invention, there is provided a novel luminescence measuring apparatus capable of measuring a luminescence amount or a luminescence intensity from plural living biological samples, such as living body tissues, cells and biological individuals, into which a gene expressing a luminescent protein has been introduced, individually for the each biological sample. In accordance with one of aspects of the present invention, the inventive luminescence measuring apparatus is characterized in that the apparatus comprises an image acquisition portion that acquires a luminescence image including at least one part of plural biological samples; a measurement region determination portion that determines at least one measurement region in the luminescence image acquired by the image acquisition portion; and a luminescence measurement portion that measures a luminescence amount or a luminescence intensity in the at least one determined measurement region based on the luminescence image acquired by the image acquisition portion when the measurement region determination portion determines the at least one measurement region, thereby measuring the luminescence amount or luminescence intensity individually by the biological sample(s) included in the at least one measurement region. In this inventive apparatus, typically, the image acquisition portion may comprise an optical microscope and a microscopic image capturing device, and the luminescence image may be a luminescence microscopic image obtained by observing light emitted owing to luminescence phenomena in the biological samples under the optical microscope.

According to the above-mentioned inventive apparatus, firstly, a luminescence image of plural living biological samples into which a gene expressing a luminescent protein has been introduced is acquired by the image acquisition portion. Then, at least one measurement region is determined in the acquired luminescence image by the measurement region determination portion, and the luminescence amount or luminescence intensity in the measurement region is measured from the image captured therein. Namely, in accordance with the use of the measurement region determination portion, it can be designed that a luminescence amount or a luminescence intensity only in an arbitrarily determined region within a luminescence image acquired at once can be measured, and therefore, by setting an certain arbitrary sample of plural biological samples, such as a cell or a particular region in a cell, into a measurement region, a measurement of a luminescence amount or a luminescence intensity of a specific sample will become possible. Further, in the inventive apparatus above, as described later in conjunction with an embodiment, by integrating the image acquisition portion, the measurement region determination portion and the luminescence measurement portion as described above, the measurement of a luminescence amount or a luminescence intensity of each sample within plural biological samples becomes very easy.

Moreover, the inventive apparatus above may further comprise an illuminating portion that applies or irradiates light onto plural biological samples, and thereby, the image acquisition portion may acquire an illumination image including plural biological samples on which light is applied by the illuminating portion; and the measurement region determination portion may be designed to generate a superposition image by superposing the luminescence image and illumination image acquired by the image acquisition portion, and then to determine at least one measurement region in the superposition image. In this regard, the illumination image may be a transmitted light microscopic image obtained by performing a transmitted light observation under an optical microscope using illuminating light from the illuminating portion.

Here, it should be understood that, in a case where a measurement region in which a luminescence amount or a luminescence intensity is to be measured is determined based upon a superposition image generated by superposing an illumination image obtained as described above and a luminescence image, the operation in the determination of the measurement region will become extremely easy. In general, the luminescence amount owing to bioluminescence phenomenon is very feeble and a luminescence image of a biological sample is too dark to be recognized with human eyes even in an observation under an optical microscope. Furthermore, in the case of the luminescence observation, light comes only from the region where luminescent proteins exist, so that it is difficult to determine the whole morphologies of biological samples and the positions of luminescent parts therein. However, in the determination of the measurement region whose luminescence amount or luminescence intensity is to be measured, if a luminescence image and an illumination image are superposed to generate a superposition image and then a measurement region is determined in the superposition image as described above, a user can grasp which of biological samples includes a region where a luminescence phenomenon has occurred, i.e., a region where a gene expression has occurred, among (images of) biological samples existing in a luminescence image, or where such a luminescent region is located, and further, in comparing and analyzing luminescence amounts and/or luminescence sites in certain specified cells, it is avoided to wrongly select the other cells. In addition, since the morphology of a sample can be confirmed irrespective of the presence or absence of luminescence, it becomes possible to grasp the morphology or conditions of a sample in which no luminescence phenomenon is observed in an image. In this connection, according to the investigation of the inventors of the present invention, in a case where the image acquisition portion consists of an optical microscope and a microscopic image capturing device, it has been found preferable that an objective and a lens assembly of the optical microscope that form an image of a biological sample on a light receiving surface of the microscopic image capturing device are designed such that the square value of the ratio of the numerical aperture of the objective to the magnification power of the image of the biological sample projected on the light receiving surface is rendered to be 0.01 or above.

In one embodiment of the present invention above, the inventive apparatus may be provided with a control portion which controls the image acquisition portion so as to make the image acquisition portion working repetitively, and, the luminescence measurement portion may be designed such that, based on the plural luminescence images acquired through the repetitive operation of the image acquisition portion under the control of the control portion, the luminescence measurement portion measures luminescence amounts or luminescence intensities from the at least one measurement region in the respective luminescence images when the at least one measurement region is determined by the measurement region determination portion. Thereby, a variation with time of a luminescence amount or a luminescence intensity of a specified region in an image can be tracked, and therefore a variation with time of an expression amount of an arbitrary specific protein genetically fused with a luminescent protein or associated therewith will be known. In this regard, in a case where the determination of the region is performed not with solely a luminescence image but with the superposition image of an illumination image and a luminescence image as described above, and the acquired data are shown in animation, it is possible to continuously display a specific cell in animation without wrongly selecting the other cells, and therefore a quick and in real time analysis becomes possible.

Furthermore, the above-mentioned inventive apparatus may be equipped with a stimulus application device for stimulating biological samples. Such a stimulus application device may be a compound addition device which adds a certain compound to biological samples, a temperature adjusting device which adjusts the temperature of biological samples, and/or a gas supplying device which supplies gas to biological samples.

Moreover, as described in the column of "Background art", for instance, in a reporter assay for performing a detection of an expression of a certain specific gene and a measurement of its variation with time in a pharmaceutical development process, a certain compound to be tested is supplied to a biological sample. Thus, in an embodiment of the above-mentioned inventive apparatus, especially for investigating an influence of such a certain compound on a biological sample, the apparatus may be further provided with a compound addition device which adds a predetermined compound to plural biological samples, thereby enabling the arbitrary supplying of a compound to a biological sample in the acquisition of a luminescence image. Also, in the above-mentioned inventive apparatus, there may be incorporated a luminescent protein expression judgment portion that judges an influence of a certain compound on a biological sample, e.g. whether or not a predetermined compound causes an expression or a localization of luminescent protein or their inhibition based on a luminescence amount or a luminescence intensity measured by the luminescence measurement portion, enabling a user to quickly know the influence of the compound on the biological sample. In this connection, more specifically, in a case where the inventive apparatus is so designed that an influence of a certain compound on a biological sample can also be investigated, the luminescent protein expression judgment portion may comprise a parameter computing portion that computes a predetermined parameter based on the luminescence amount or luminescence intensity measured by the luminescence measurement portion; and a parameter-threshold judging portion that judges whether or not the predetermined compound caused an expression or a localization of luminescent protein or their inhibition based on the predetermined parameter computed by the parameter computing portion. The predetermined parameter may be an arbitrary index indicating an influence of a compound on a biological sample, for example, IC 50, half value, and a rate constant (for example, in many cases, an effect of a reagent is indicated by "half value", i.e. a concentration giving a half (50%) of the value of the 100% effect of the reagent.). In addition, in order to catch a variation of luminescence in a biological sample in response to an addition of certain compound exactly and in real time, and to enable a judgment for the expression of a luminescent protein, the inventive apparatus may comprises a control portion that controls the compound addition device and the image acquisition portion and commands the timings of a compound addition and an image acquisition.

By the way, in measuring a luminescence amount or a luminescence intensity of an arbitrary biological sample, a luminescence image may be acquired with an external arbitrary apparatus and then the luminescence amount or luminescence intensity of an arbitrary region in the luminescence image may be measured. Thus, according to another aspect of the present invention, there is provided an information processing device for the luminescence measurement which computes a luminescence amount or a luminescence intensity of plural living biological samples into which the gene expressing a luminescent protein has been introduced based upon a luminescence image of the biological samples, characterized in that the device comprises a measurement region determination portion that determines at least one measurement region in a previously acquired luminescence image including an image of a biological sample; and a luminescence measurement portion that measures a luminescence amount or a luminescence intensity of the at least one measurement region in the previously acquired luminescence image based on the luminescence image of the living biological samples. In this device, although the transmission of a luminescence image to the device is required, when the luminescence image has been acquired once, it will become possible to individually measure or compute luminescence amounts or luminescence intensities of plural biological samples captured in a luminescence image.

It should be understood that the operation of a series of above-mentioned aspects and/or various embodiments of the present invention can be realized by using an arbitrary computer for the operational control. Therefore, according to the present invention, there is provided a computer program for controlling an operation of a luminescence measuring apparatus that measures a luminescence amount or a luminescence intensity from plural living biological samples into which a gene expressing a luminescent protein has been introduced, characterized in that the program comprises procedures of: acquiring a luminescence image including at least one part of biological samples by operating an image acquisition portion that acquires a luminescence image including at least one part of biological samples; determining at least one measurement region in the luminescence image acquired by the image acquisition portion; and computing a luminescence amount or a luminescence intensity in the at least one determined measurement region based on the luminescence image acquired by the image acquisition portion, thereby making a computer perform a measurement of a luminescence amount or a luminescence intensity individually by the biological sample(s) included in the at least one measurement region. This computer program may be designed to perform repetitively the procedure of acquiring the luminescence image including the at least one part of biological samples to acquire plural luminescence images, and in this case, based upon the plural luminescence images, the luminescence amount or luminescence intensity from at least one determined measurement region may be computed in each luminescence image in the procedure of computing the luminescence amount or luminescence intensity in the at least one determined measurement region, whereby the variation with time of the luminescence amount or luminescence intensity can be known as in the above-mentioned apparatus.

In addition, the above-mentioned computer program may further comprise the procedures of operating an illuminating device to irradiate light to plural biological samples; operating the image acquisition portion to acquire an illumination image including the biological samples on which the light is irradiated by the illuminating device, wherein, in the procedure of determining the at least one measurement region in the luminescence image, the luminescence image and illumination image may be superposed to generate a superposition image, on which the at least one measurement region may be determined. In this case, as in the above-mentioned inventive apparatus, typically, the luminescence image may be a luminescence microscopic image obtained with an optical microscope and a microscopic image capturing device by observing the light emitted owing to a luminescence phenomenon in a biological sample under the optical microscope, and the illumination image may be a transmitted light microscopic image obtained with an optical microscope and a microscopic image capturing device when a transmitted light observation under the optical microscope is performed. Then, it is preferable that the optical system of the optical microscope including an objective and a lens assembly that form an image of a biological sample on the light receiving surface of the microscopic image capturing device are designed such that the square value of the ratio of the numerical aperture of the objective to the magnification power of the image of the biological sample projected on the light receiving surface is rendered to be 0.01 or above.

Furthermore, in the computer program above, for the purpose of investigating an influence of an arbitrary stimulus on a biological sample, a procedure of providing a stimulus to the biological sample may be performed prior to the procedure of acquiring the luminescence image, where the stimuli provided to the biological sample in the procedure of providing the stimulus to the biological sample may be a reagent or drug stimulus, an electric stimulus, a gas stimulus, a heat stimulus, etc. Moreover, especially for the purpose of investigating an influence of an arbitrary compound on a biological sample, there may be performed prior to the process of acquiring the luminescence image, a procedure of operating a compound addition device, capable of adding a certain predetermined compound to biological samples, to add predetermined compound to biological samples; and a procedure of judging whether or not the predetermined compound has caused an expression or a localization of luminescent protein or their inhibition based on the luminescence amount or luminescence intensity measured in the procedure of computing the luminescence amount or luminescence intensity in the determined measurement region. In this case, as in the inventive apparatus, the procedure of judging whether or not the predetermined compound has caused an expression or a localization of luminescent protein or their inhibition typically comprises a process of computing a predetermined parameter based on the luminescence amount or luminescence intensity; and a procedure of judging whether or not the predetermined compound has caused an expression or a localization of luminescent protein or their inhibition based on the computed predetermined parameter.

Yet further, the feature that a luminescence amount or a luminescence intensity of plural biological samples can be measured individually and easily for each biological sample can also be accomplished, as in the case of the inventive apparatus, by a computer program for a luminescence measurement of computing a luminescence amount or a luminescence intensity from plural living biological samples into which a gene expressing a luminescent protein has been introduced from a luminescence image of the living biological samples, characterized in that the program comprises procedures of: determining at least one measurement region in a previously acquired luminescence image including an image of a biological sample; and measuring a luminescence amount or a luminescence intensity of at least one measurement region in the previously acquired luminescence image based on the luminescence image of the living biological samples.

Thus, in accordance with the operation of the above-mentioned inventive apparatus or computer, as a method of achieving the objects of the present inventions, there is carried out a luminescence measurement method of measuring a luminescence amount or a luminescence intensity from plural living biological samples into which a gene expressing a luminescent protein has been introduced, characterized in that the method comprises steps of: acquiring a luminescence image including at least a part of plural biological samples; determining at least one measurement region in the luminescence image; and measuring a luminescence amount or a luminescence intensity in the determined measurement region based on the luminescence image, thereby measuring the luminescence amount or luminescence intensity individually by the biological sample(s) included in the at least one measurement region. In addition, the inventive method may further comprise steps of irradiating light on the biological samples with an illuminating apparatus, and acquiring an illumination image including the biological samples on which the light is applied by the illuminating apparatus, wherein, in the step of determining the at least one measurement region in the luminescence image, a superposition image may be generated by superposing the luminescence image and illumination image, and the at least one measurement region may be determined in the superposition image. Moreover, in the above-mentioned method, plural luminescence images may be acquired by repetitively performing the step of acquiring the luminescence image including the at least one part of biological samples. In the step of measuring the luminescence amount or luminescence intensity in the determined measurement region, a variation with time of a luminescence amount or luminescence intensity may be measured by measuring, based on the plural luminescence images, a luminescence amount or a luminescence intensity from the at least one determined measurement region in each luminescence image.

In this regard, typically, as in the case of the above-mentioned inventive apparatus, the luminescence image may be a luminescence microscopic image obtained with an optical microscope and a microscopic image capturing device by observing the light emitted owing to a luminescence phenomenon in a biological sample under the optical microscope, and the illumination image may be a transmitted light microscopic image obtained with the optical microscope and the microscopic image capturing device when a transmitted light observation under the optical microscope is performed. Then, preferably, an objective and a lens assembly of the optical microscope that form an image of a biological sample on the light receiving surface of the microscopic image capturing device are designed such that the square value of the ratio of the numerical aperture of the objective to the magnification power of the image of the biological sample projected on the light receiving surface is rendered to be 0.01 or above.

Furthermore, in the inventive method above, for investigating an influence of an arbitrary stimulus on a biological sample, a step of providing a stimulus to the biological sample may be carried out prior to the step of acquiring the luminescence image, where the stimulus provided to the biological sample in the step of providing the stimulus to the biological sample may be a reagent or drug stimulus, an electric stimulus, a gas stimulus, a heat stimulus, etc. Moreover, especially in a case of investigating an influence of an arbitrary compound on the biological sample, there may be executed prior to the step of acquiring the luminescence image, a step of adding a predetermined compound to biological samples; and then a step of judging whether or not the predetermined compound has caused an expression or a localization of luminescent protein or their inhibition based on the luminescence amount or luminescence intensity measured in the step of measuring the luminescence amount or luminescence intensity in the determined measurement region. In this case, in one embodiment, the image acquisition may be performed depending upon the timing of a compound addition, and in the step of judging whether or not the predetermined compound has caused an expression or a localization of luminescent protein or their inhibition typically comprises a step of computing a predetermined parameter based on a luminescence amount or a luminescence intensity; and a step of judging whether or not the predetermined compound has caused an expression or a localization of luminescent protein or their inhibition based on the computed predetermined parameter.

Consequently, according to the above-mentioned inventive apparatus, computer program or method, in general, when a luminescence amount or a luminescence intensity is measured from plural living biological samples into which a gene expressing a luminescent protein has been introduced, it becomes possible to selectively measure the luminescence amount or luminescence intensity of an arbitrary sample to be observed arbitrarily. And, by measuring the luminescence amount or luminescence intensity of each biological sample, irrespective of individual differences or variation of the efficiencies of transfer of the gene of a luminescent protein to a cell and its gene expression in a cell, it will become possible to observe only a cell or cells of the biological samples in which cell(s) the gene has been successfully expressed and to measure the luminescence amount or luminescence intensity thereof.

The feature of the present invention that a luminescence amount or a luminescence intensity can be measured only for a cell or a biological sample to be observed in which the gene expression has successfully occurred enables obtaining a result in an investigation of an influence that a certain compound provides truly on a biological sample while eliminating any artifact relating to the gene introduction efficiency, etc., and consequently, it is expected that the ways of the measurement of a luminescence amount and/or a luminescence intensity of a biological sample in accordance with the present invention will become available as one of useful tools in a reporter assay for a compound screening for a pharmaceutical development process as described in the column of "Background Art". Still further, in some embodiments of the inventive apparatus and/or computer program, there is constructed a system integrating from the acquisition of luminescence images to the measurement of a luminescence amount or a luminescence intensity, or also to the judgment of whether or not an arbitrary predetermined compound caused an expression or a localization of a luminescent protein or their inhibition, so that a reporter assay can be carried out quickly and easily, compared with the prior art.

Other purposes and advantages of the present invention will be in part apparent and in part pointed out hereinafter.

### Brief Description of the Drawings

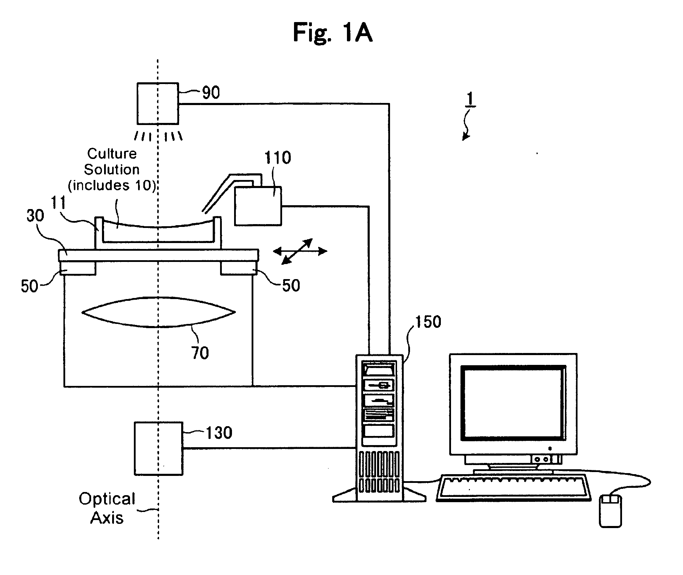

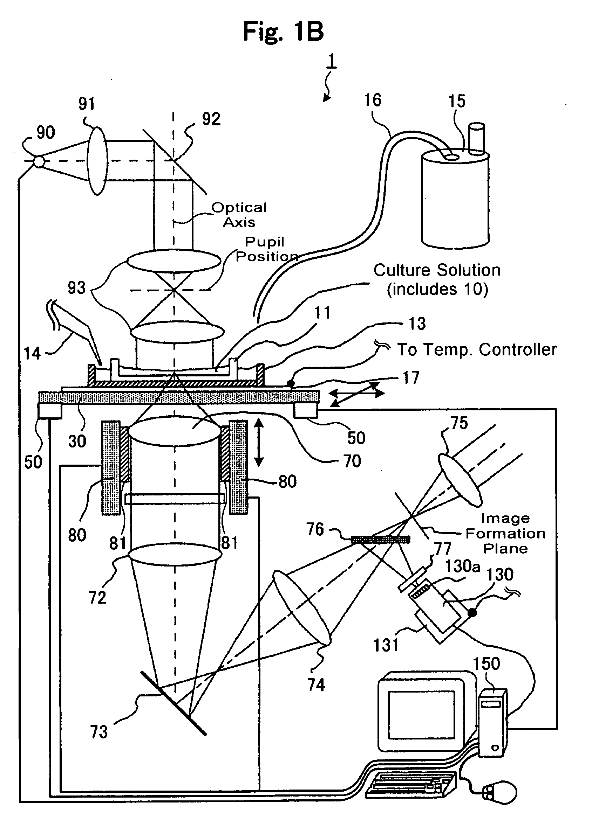

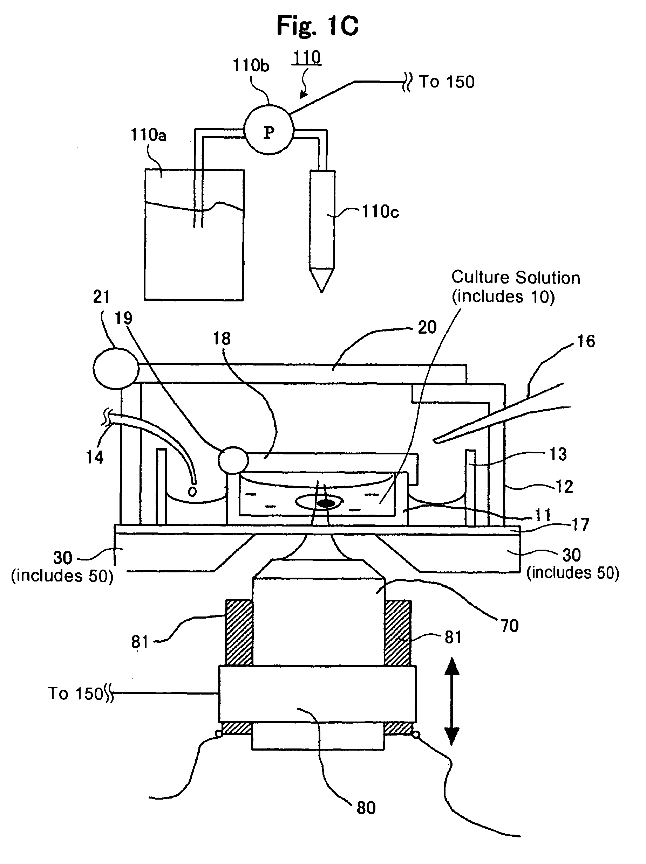

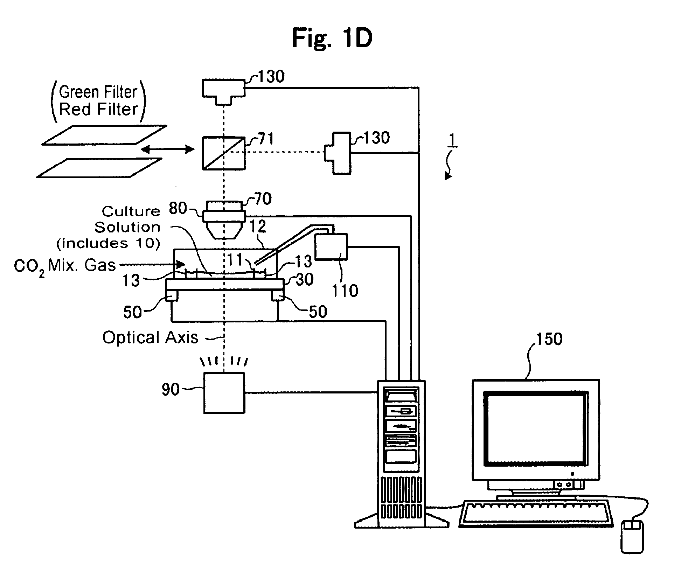

Fig. 1A is a schematic diagram showing an example of a basic structure of a preferable embodiment of the inventive luminescence measuring apparatus. Fig. 1B is a schematic diagram of the structure of an embodiment of the inventive luminescence measuring apparatus comprising an inverted optical microscope, and Fig. 1C is a schematic diagram showing around a sample container of Fig. 1B including a device providing a stimulus to a cell more in details. Fig. 1D is a schematic diagram explaining an alternative example of the inventive luminescence measuring apparatus using two image capturing devices.
Fig. 2A is a drawing showing a control structure in an information processing device 150 of the luminescence measuring apparatus in the form of a block diagram, and Fig. 2B is a schematic diagram of a console panel connected to the information processing device 150.
Fig. 3 is a functional block diagram showing CPU 150a which operates as a control portion in the information processing device 150 together with related devices.

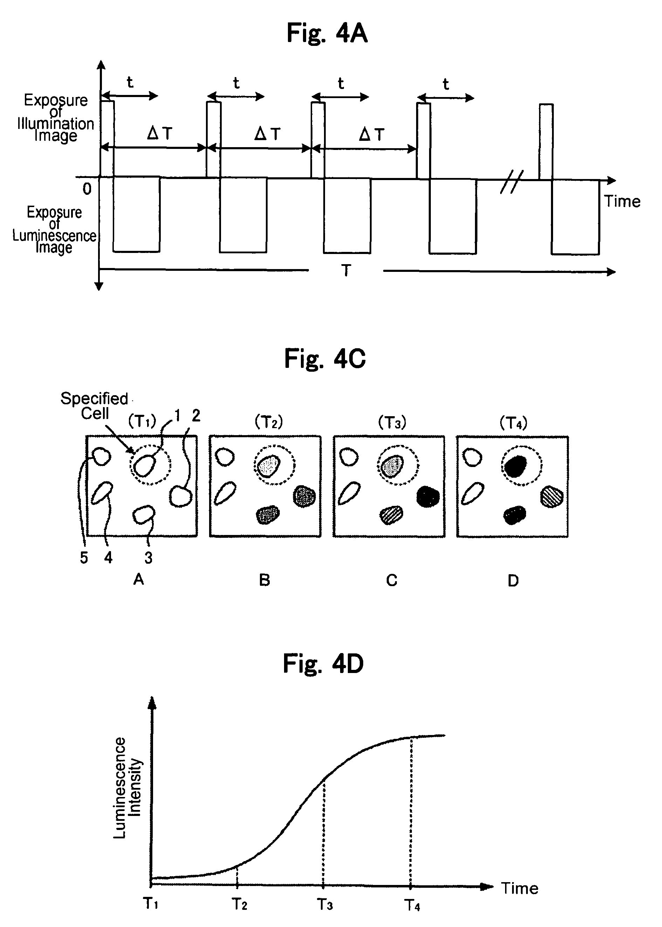

Fig. 4A is a drawing explaining a process in a case where repetitive acquisitions of illumination images and luminescence images are executed. Term T indicates the length of time to acquire all images, Exposure time t indicates a time for capturing a set of an illumination image and a luminescence image, and Image-capturing time interval ΔT indicates a time interval between sequential start points of processes of capturing an illumination image and a luminescence image. In each exposure time t, when a horizontal line is in the upper side in the drawing, it is the acquisition term during which the illumination image is captured with the light source being turned on, and when a horizontal line is in the lower side in the drawing, the light source is turned off and the acquisition of a luminescence image is performed.
Fig. 4B shows the process in setting up an observation region in the form of a flow chart.
Fig. 4C is a view which schematically shows superposition images of luminescence images and illumination images of a measurement sample (cell), with time progress, explaining how a measurement region is determined.
Fig. 4D is a graph showing an example of an expected variation of a luminescence intensity in the measurement region of Fig. 4C. The respective intensities at T1-T4 in the drawing schematically indicate luminescence intensities in the measurement region of the corresponding images of Fig. 4C.
Fig. 5A schematically shows the examples of variations of luminescence amounts expected in the measurement of luminescence amounts in the inventive luminescence measuring apparatus carried out with different concentrations of a compound being added to a measurement sample. Fig. 5B is a drawing explaining the calculation process of a reaction rate constant executed with the results of Fig. 5A. Fig. 5C is a drawing explaining the changes of the luminescence amounts expected when different kinds of compounds A and B are added to a measurement sample.

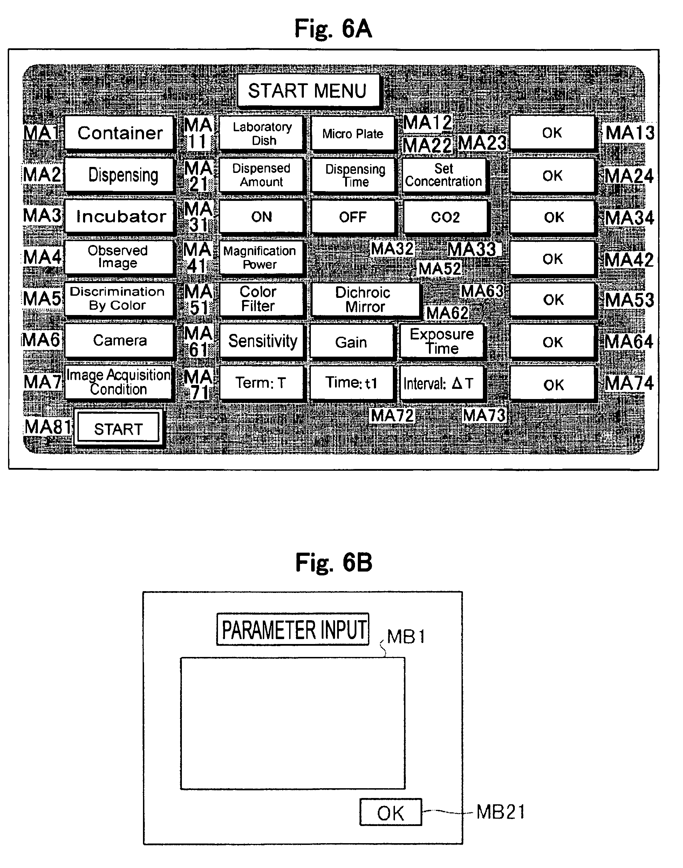

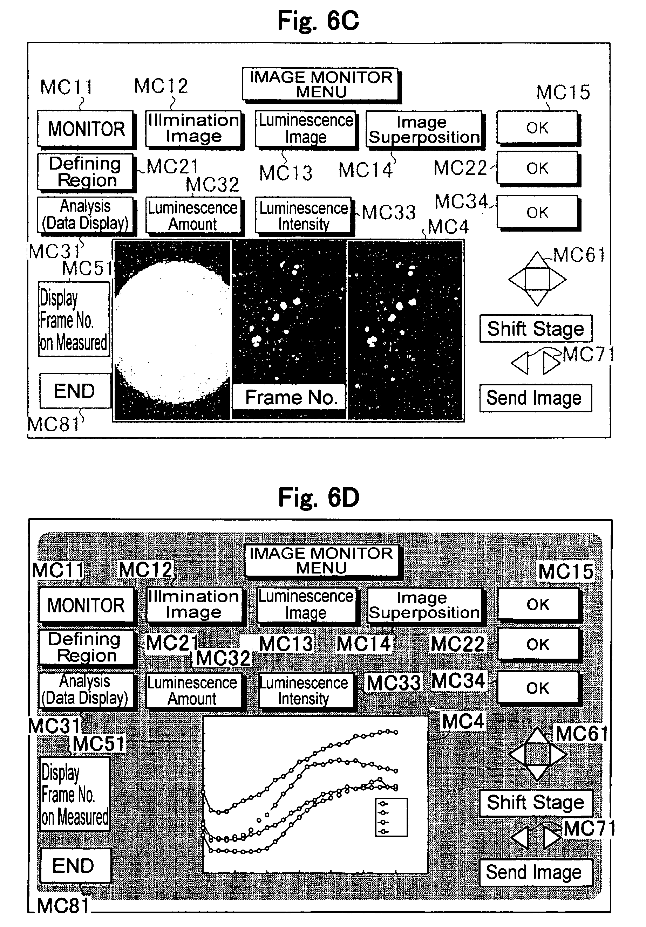

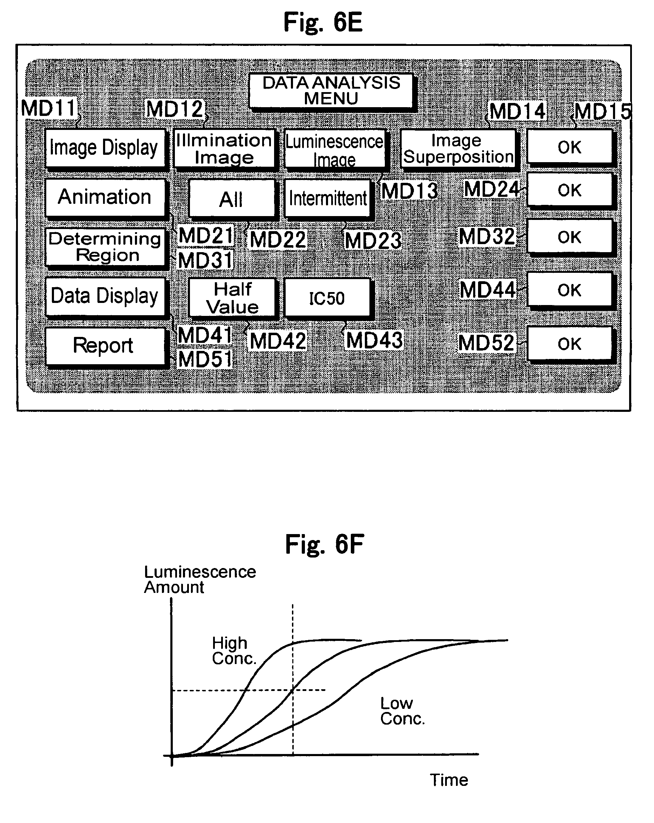

Fig. 6A is an example of a start menu screen displayed on a TV monitor in an embodiment of the inventive luminescence measuring apparatus; Fig. 6B is an example of a parameter input screen used for the input of parameters in the start menu screen; Figs. 6C and 6D are examples of image monitor menu screens displayed on the TV monitor in an embodiment of the inventive luminescence measuring apparatus; Fig. 6E is an example of a data analysis menu screen for performing display setting of the image monitor menu screen and result analysis; Fig. 6F shows graphs of luminescence amounts drawn in the graphical representation of Fig. 6D together with auxiliary lines (broken lines) indicating a half value.
Fig. 7A is a flow chart showing steps of operations in a luminescence measurement and analysis when an arbitrary compound is added to a measurement sample; and Fig. 7B is a flow chart showing of steps of acquiring and storing luminescence images and/or illumination images in one image acquisition process.
Fig. 8 is a flow chart showing an example of operations of a reporter assay performed in a luminescence measuring apparatus 1.
Fig. 9 are drawings explaining about conditions of molecules expected in a plasmid to be introduced into a Hela cell used as a sample of Example, in which plasmid a luciferase gene is connected to an expression vector having a tetracycline operator (Tet02). As shown in Fig. 9A, when a TetR homodimer combines with a Tet02 region, the luciferase gene connected to Tet02 region is not expressed. On the other hand, when tetracyclines are given to the cell, the TetR homodimer structurally changes and separates from the Tet02 region as seen in Fig. 9B, leading to the expression of a luciferase.
Figs. 10 are an illumination image (A), luminescence images (B, C), and a superposition image (D) of the HeLa cells in the example.
Fig. 11A is a superposed image of an illumination image and a luminescence image, where the measurement regions are determined.
Fig. 11B is a drawing showing a measurement result of variations with time of luminescence intensities of luciferase from ROIs in Fig. 11A.

### Best Modes of Embodiments of the Invention

In the followings, the present inventions are explained about in detail with respect to several preferred embodiments with reference to the accompanying drawings, in which the same reference numerals indicate the same parts.••

### Structure of the Inventive Apparatus

### Basic structure

Fig. 1A schematically shows the outline structure of a preferable embodiment of the luminescence measuring apparatus 1 in accordance with the present invention for measuring an amount or an intensity of light emitted owing to a bioluminescence phenomenon in an arbitrary biological sample, such as a living tissue of a living organism, a cell and a biological individual.

Referring to the drawing, the inventive luminescence measuring apparatus comprises, as basic components, a container 11, such as a laboratory dish and a micro plate, into which a culture solution containing a measurement sample 10 and a luminescence substrate is put; a stage 30 made of a plate member for laying a container 11 thereon, two stage moving devices 50, attached in predetermined positions of the stage in the directions perpendicular (in the directions of 90°) to one another, for moving the stage 30 two-dimensionally; an objective 70 for forming an image of the measurement sample 10; an illuminating device 90 for irradiating light on the measurement sample 10; a compound addition device 110 for adding a predetermined compound to the measurement sample 10; an image capturing device 130 for capturing an image of the measurement sample 10 formed with the objective 70; and an information processing device 150 for controlling the operations of the above-mentioned respective devices and processing information acquired in each device or information transmitted from each device.

In this basic structure, the stage 30 may be mounted to be perpendicular to the optical axis of the objective 70 (hereafter, called as the Z-axis), and movable in the directions (for example, X direction and Y direction) perpendicular to the optical axis (Z-axis) by driving the moving devices 50 with a stage controller (not shown) under the control of the information processing device 150. Further, for irradiating light to the measurement sample 10, the illuminating device 90 may comprise an incoherent light source of wavelength in a visible range, such as a halogen lamp, an LED light source, a tungsten lamp, a mercury lamp and a metal halide lamp. In this regard, a light source of coherent light, such as a laser, may be used for the light source while its light being changed into an incoherent light with a diffusion plate, etc. Moreover, although, in usual, the light having wavelength in the visible range is used, infrared light may be used. It should be understood that the illuminating device 90 may not be equipped in the apparatus when no acquisition of illumination image is performed.

The imaging capturing device 130 typically includes a CCD (Charge-Coupled Device) camera of a high sensitivity having an image sensor, and as described in detail later, and captures both of a luminescence image (an image of the measurement sample 10 when the light emitted owing to a bioluminescence phenomenon from a tissue or a cell, etc. in the measurement sample 10 is observed by means of the objective) and an illumination image (an image of the measurement sample 10 when the measurement sample 10 is observed with the illumination light from an illuminating device 90 by means of the objective) under the control of the information processing device 150. Preferably, the CCD camera may be a cooled CCD equipped with a cooling system having a Peltier device for cooling and maintaining the temperature at about 0 °C to suppress a dark current, but a CMOS image sensors, an SIT camera, etc. may be used. A three-plate type color camera may also be used for the image capturing device 130 in order to capture a colored illumination image.

In this regard, in order to acquire a good luminescence image in the above-mentioned invention, the objective 70 which forms an image of the measurement sample 10 on the image capturing device 130 is selected so that a condition that the value of (Numerical-aperture/magnification power)² is 0.01 or above can be fulfilled.

Further, for the purpose of investigating an influence of an arbitrary compound on a biological sample in the measurement sample 10 the compound addition device 110 may be a quantitatively accurate dispensing device that adds a predetermined compound (for example, tetracycline etc.) into the container 11 under the control of the information processing device 150.

And the information processing device 150 may be an arbitrary usual personal computer capable of controlling operations of a series of components in the above-mentioned luminescence measuring apparatus as described in detail later.

### An Example of the Structure of the Luminescence Measuring apparatus

The inventive luminescence measuring apparatus above may be constructed with an inverted microscope. In Figs. 1B and 1C, an exemplary structure in that case is illustrated schematically.

The luminescence measuring apparatus as illustrated in Fig. 1B comprises an inverted microscope including an illumination optical system for introducing the light from a light source (illuminating device) 90 to a measurement sample 10, an observation optical system for generating an image of the measurement sample 10; an eyepiece 75 for expanding the image of the measurement sample 10 for the eye observation; a CCD camera (an image capturing device or microscopic image capturing device) 130 having an image sensor 130a for capturing a microscopic image of the measurement sample 10; and a computer 150 (information processing device) connected with the CCD camera 130 and having TV monitor 150 g.

The structure of the above-mentioned optical microscope may be of an ordinary inverted type microscope, where the illumination optical system is constructed with a collector lens 91, a deflection mirror 92 for deflecting the optical axis of illumination light and a condenser lens 93 in said order starting from the light source 90. On the other hand, the observation optical system is constructed with an objective 70 for forming an image of the measurement sample 10, a first relay lens 72, a deflection mirror 73 for deflecting the light from the objective 70 and a second relay lens 74 cooperating with the first relay lens 72 to form the image from the objective 70 (the image of the measurement sample 10) on an image-formation plane. Between the second relay lens 74 and image-formation plane, a change-over mirror 76 may be mounted for enabling one to arbitrarily change the way of observation of the image of the measurement sample 10 between an eye observation through the eyepiece 75 and an observation with the CCD camera 130. In this connection, for the change-over mirror 76, instead of the use of that of a mechanical change-over type, a half mirror may be used to divide the optical path into two.

In a transmitted light observation of the measurement sample in the above-described structure, the measurement sample 10 is illuminated by Koehler illumination as in a case of a transmitted light observation with a normal optical microscope. Accordingly, the light from the light source 90 is first turned into a parallel beam by the collector lens 91, and led to illuminate the measurement sample 10 while the image of the light source 90 is formed in the pupil position of the condenser lens 93. Then, the light which has illuminated the measurement sample 10 is passing through the measurement sample 10 into the objective 70 to form an image of the measurement sample 10 on the image formation plane by means of the first relay lens 72 and second relay lens 74, and the resultant image of the measurement sample 10 on the image formation plane is observed with the eyepiece 75 by an observer. Further, in capturing the image of the measurement sample 10 with the CCD camera 130, the light which has been passing through the second relay lens 74 is reflected on the change-over mirror 76, and thereby the image of the measurement sample 10 is formed on the image sensor 130a of the CCD camera 130. In this connection, the magnification of the objective may be, for example, at 20 times.

As shown in detail in Fig. 1C, the container 11, into which the measurement sample 10 is put with a culture solution, preferably, may be a sample container 11 like a laboratory dish with a cover 18 pivoting with a hinge 19. The bottom of the sample container 11 is made of a material having the same characteristics as an optically transparent cover glass for microscopes and a thickness of 0.17 mm so that a sample on the bottom of the sample container 11 is observable with a normal objective (In this connection, the sample container 11 is not limited to such a laboratory dish, and, instead, a slide glass, a micro plate, etc. may be used.). Further, in order to maintain the humidity in the sample container 11, the sample container 11 is positioned within a water bath 13 to which pure water is supplied through a nozzle 14, and further held in a lidded incubator 12 together with the bath 13. Then, as shown in detail by Fig. 1C, onto the upper surface of the bath 13, CO₂ gas is supplied through a gas supply tube 16 from a gas cylinder 15, seated in the exterior of the measuring apparatus. Gas in the gas cylinder 15 is, for example, mixed gas of 5% CO₂ and 95% O₂. The flow velocity of the CO₂ gas supplied into the incubator 12 may be at about 50 mL/min. In addition, preferably, a heat plate 17 may be laid under the sample container 11. The heat plate 17, in typical, adjusts a temperature in the sample container by the stepped intervals of 0.5 °C with a temperature controller (not shown).

Moreover, in an automatic dispensing device 110 used as the compound addition device which adds a predetermined compound into the container 11 under the control of the information processing device 150, a reagent solution of a predetermined amount is taken in with a pump 110b from a reagent container 110a, and discharged from a nozzle 110c into the container 11. As seen in the drawing, when the sample container 11 is put in the lidded incubator 12, preferably, the lid 20 of the incubator 12 and the lid 18 of the sample container 11 are opened by means of a motor (not shown) in harmony with the operation of the automatic dispensing device 110 prior to a discharge of a reagent solution from the nozzle 110c, and after the discharge of the solution, the lid 20 and the sample container lid 18 are closed with the motor. In this regard, under the control of the computer explained later, the automatic dispensing device 110 may be operated before and after acquisition of a microscopic image and/or at an arbitrary time in between.

Furthermore, as described in the explanation of the basic structure of the inventive apparatus, preferably in the sample stage 30, there may be mounted the stage moving devices that arbitrarily move the sample stage 30 horizontally (in an X direction and a Y direction). The stage moving devices may be formed of two stepping motors (not shown), which are driven by means of a sample stage controller (not shown) based on commands of the information processing device 150 so that the position of the sample stage 3 can be shifted and adjusted automatically.

In addition, preferably, around the objective 70 positioned under the sample stage 30, an objective heater 81 may be mounted to be in contact with the objective 70, so that the temperature of the objective 70 can be adjusted by the stepped interval of 0.5 °C under the control of a temperature adjusting device (not shown) with the objective heater 81 and thereby the objective 70 will be externally maintained at an arbitrary temperature. Also, around the objective heater 81, there is equipped a focus position changing device 80. The focus position changing device 80 is a mechanism for driving the objective in the Z axis, and moves the objective 70 up- and downwardly by means of a rack and pinion mechanism (not shown). The operation of rotating a knob of the rack and pinion mechanism is performed with a computer-controlled stepping motor (not shown). Alternatively, the Z-axis objective driving mechanism may be a frictional roller mechanism.

The image sensor 130a in the light receiving surface of the CCD camera 130 capturing the luminescence image and illumination image of the measurement sample 10 may have, for example, the number of pixels of 1,360 x 1,024. In the inventive apparatus, as noted, both the transmitted light microscopic image (illumination image), obtained in the transmitted light observation of the measurement sample 10, and the luminescence microscopic image (luminescence image), obtained in the luminescence observation of the measurement sample 10, i.e., by observing the feeble light emitted owing to the luminescence phenomenon in a cell in the measurement sample 10, may be captured with the CCD camera 130. Thus, as described, for the purpose of improving the S/N ratio in a luminescence observation, the CCD camera 130 may be equipped with a cooling system 29 having a Peltier device in the bottom thereof which cooling system suppresses the dark current in the camera, enabling the cooling and maintaining the temperature thereof around 0 •C. In addition, it is preferable that, above the light receiving surface of the CCD camera 130, an infrared cut filter 77 is mounted to cut off an infrared radiation which would be a background light. An image captured with the CCD camera 130 is transmitted through a signal cable to the information processing device 150 and displayed on a TV monitor. Further, the CCD camera 130 may be a 3 plate-type color camera capable of capturing a colored illumination image. For an image capturing device of a microscopic image, for instance, a CMOS image sensor, an SIT camera, etc. may be employed.

Furthermore, although the inverted optical microscope is used for the apparatus for acquiring images of the measurement sample 10 in the basic structure of Fig. 1A and the examples of the structure of Figs. 1B-C, the optical microscope may be an erect-type microscope, and plural image capturing devices 130 may be equipped. For instance, as shown in Fig. 1D, the objective 70 may face to the measurement sample 10 from the upper side of the container 11 laid on the stage 30 (In this case, the structure of the incubator 12 may be suitably modified so that the objective 70 can face to the measurement sample 10.).

Moreover, in a case where two image capturing devices 130 are provided (it should be understood that an inverted microscope may be used.), the light emitted from the measurement sample 10 passes the objective 70, and dichroic mirror 71, which divides the light in accordance with the wavelength of light (namely, the color of light, such as red, green), and these divided lights are captured with different image capturing devices 130, dependent upon the respective wavelengths, and accordingly, the capturing of images of the measurement sample 10 will become possible selectively by the wavelength of light. This function allows the observation of luminescences of luminescent proteins having different wavelengths in one measurement sample and/or the observation of a fluorescent material of a fluorescence wavelength different from a luminescence wavelength of a luminescent protein in one measurement sample. In this regard, in order to select a wavelength of an image to be captured, it should be understood that the optical filter selectively passing an arbitrary wavelength may be used (Plural filters may be exchanged alternatively for the selection of a color.).

### Structure of Information processing device

The information processing device 150 may be constructed with a computer including a CPU and capable of executing various kinds of image processings of arbitrary types, well-known for a person skilled in the art. As noted, the information processing device 150 controls the operations of the respective portions in the inventive luminescence measuring apparatus to acquire a microscopic image as an image data, and also to perform the processing and analysis of acquired images as well as the operational controls of the respective devices in the luminescence measuring apparatus.

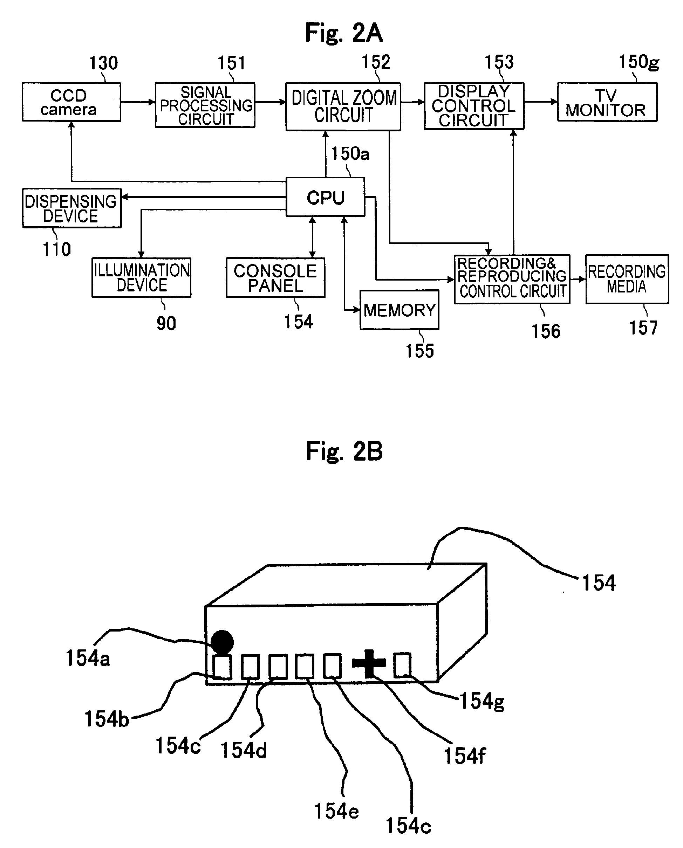

Fig. 2A represents the structures of the information processing device 150 and the respective devices equipped in the luminescence measuring apparatus in a form of a function block diagram. Referring to the diagram, the information processing device 150 comprises a CPU 150a, a memory 155 storing control programs for controlling operations of CPU 150a, a signal processing circuit 151 and a digital zoom circuit 152 for converting an image captured with the CCD camera 130 into an image data, a display control circuit 153 and a TV monitor 150g for displaying images captured with the CCD camera 130, a recording and reproducing control circuit 156 and a drive of a recording medium 157 for recording and/or displaying on the TV monitor 150g an image captured with the CCD camera 130 and/or an image obtained by processing the captured image, and a console panel 154 for inputting a command of a user. On the console panel 154, as illustrated in Fig. 2B, there are provided various buttons, such as a reproducing button 154a, a recording button 154b, a shutter button 154c, a zoom enlarging button 154d, a zoom reducing button 154e, a cross cursor button 154f and an operational mode switch 154g, and thereby a user's command can be inputted to the information processing device 150 through the console panel 154 connected to the CPU 150a.

In the above-described structure, a microscopic image of the measurement sample 10 formed on the image sensor 130a of the CCD camera 130 is converted into an analog electrical signal, i.e., an analog image signal, by means of the image sensor. The resultant image signal is then transmitted to the signal processing circuit 151 under the control of the CPU 150a, where, for the image signal, an amplification process, a filtering process and/or any image processings, such as edge enhancement, are executed. Then, subsequently, the processed image signal is sent to the digital zoom circuit 152 (digital signal processing portion). The digital zoom circuit 152 executes an A/D conversion of the analog image signal from the signal processing circuit 151 to produce a digital image signal, and, after any digital processing, such as a gamma correction, depending upon its necessity, the resultant digital image signal is transmitted to the display control circuit 153 for displaying the image on the TV monitor 150g and the recording and reproducing control circuit 156 for recording the image data into the detachable recording medium 157 (for example, a memory card, a hard disk, a magnetic disk, a magneto-optical disc, etc.) set in a memory slot (not shown). In this connection, the digital zoom circuit 152 in the inventive apparatus is designed to be capable of cutting out only an arbitrary region within the whole pixel region captured with the CCD camera 130, and transmitting the cut-out image region, while enlarging it at arbitrary magnification ratio, to the display control circuit 153 or the recording and reproducing control circuit 156. Consequently, displaying only a part of a microscopic image captured with the CCD camera 130 on TV monitor 150g while the part being enlarged and/or recording only the part become performable.

Moreover, in the above-described structure, the recording and reproducing control circuit 156 may be designed so as to read out a digital image signal recorded in the recording medium 157 in response to a reproduction control signal given from CPU 150a, and the read-out digital image signal may be inputted through the display control circuit 153 into the TV monitor 150g so that the recorded image of the measurement sample 10 can be displayed on the screen of the TV monitor 150g.

In operation of the above-mentioned information processing device, when a user turns ON the recording button 154 on the console panel, the inventive apparatus executes a recording mode in which CPU 150a supplies a record controlling signal to the recording and reproducing control circuit 153. Then, in response to the record controlling signal, the recording and reproducing control circuit 153 records an image signal, supplied from a digital zooming circuit 152, into a recording medium. Further, when the reproduction button 154b is turned ON, the inventive apparatus starts a reproduction mode, in which CPU 150a supplies a reproduction control signal to the recording and reproducing control circuit 156, which displays an image data recorded as above on the TV monitor 150g. Furthermore, when the recording button 154a and shutter button 44 are simultaneously pushed on, a control signal from CPU 150a is outputted to the digital zoom circuit 34, and one image frame from the CCD camera 130 at that time is treated with the digital signal processing and incorporated into the memory 155. Then, the image data incorporated into the memory 155 is compressed by an arbitrary compression circuit and recorded on a memory card by means of a card reader / writer device.

The setting-up for the cutting-out of only an arbitrary region within the whole pixel region incorporated by means of the CCD camera 130, executed in the digital zoom circuit 152, is done by using the zoom enlarging button 154d, zoom contracting button 154e and cross cursor button 154f. In the setting-up of the cutting out of an image region, "zoom centering position" indicating the center of an image region to be cut out by the digital zoom circuit 152 is displayed as well as the frame of the region to be cut out on the TV monitor 150g. A user is allowed to operate the cross cursor button 154f to set the zoom centering position at an arbitrary position while looking at the TV monitor 150g, and also allowed to determine the size of the image region to be cut out by means of the zoom enlarging button 154d and zoom reducing button 154e. The magnification ratio of the image resulting from the cutting out process can be set up freely within the range of M= 1.00 (the whole region captured by the CCD camera) to 4.00 (1/4 of the whole region captured with the CCD camera).

In this connection, the enlargement of an image as described above may be done by adjusting the optical system in the microscope (optical zooming), instead of the use of the digital zoom circuit 152. For example, such optical zooming is performed by shifting the focal distance between the CCD camera 130 and the second relay lens 74 along the optical axis by the motor-driving of a stepping motor. Also, in the structure of lens (zoom lens) for performing optical zooming, the focal distance of the lens may be changeable in 10 steps manually or automatically, using a lens group of three variable powers, a compensation lens group performing aberration compensation etc. and a focal lens performing a focal adjustment (not shown). Driving the zooming lens may be conducted such that the zooming lens is moved along the optical axis by the operation of a zooming motor (an ultrasonic motor etc.) mounted on the perimeter of the zooming lens based on the control signal outputted from CPU 150a.

Further, as an important structure, the information processing device 150 may be connected with an automatic dispensing device 110 and an illuminating device 90 in order to control the operations of those devices, so that acquiring an image signal captured with the CCD camera 130 can be performed synchronously with the execution of a dispensing operation by the automatic dispensing device 110.

### Processing in CPU

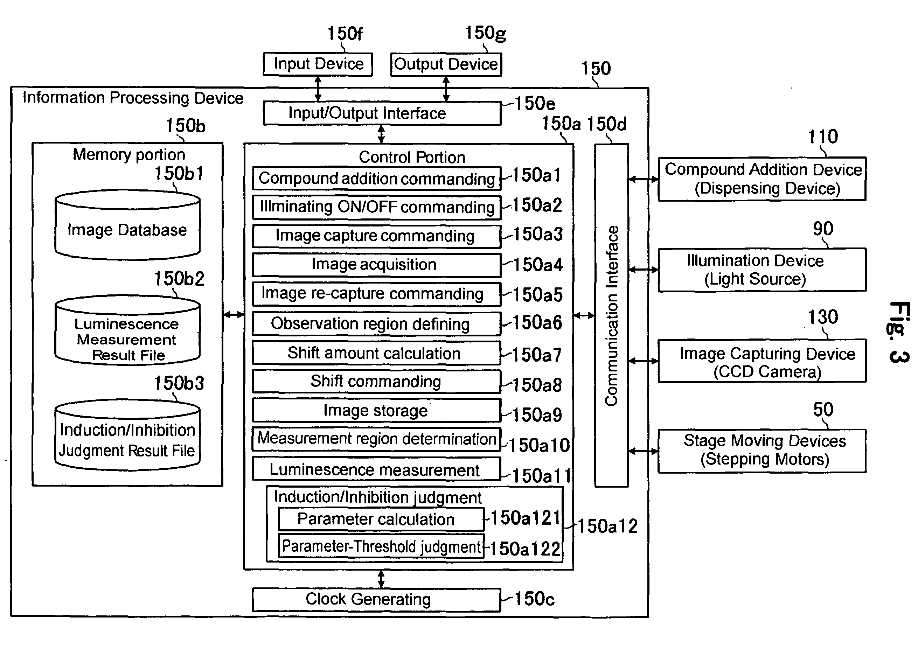

The operational controls of the respective devices and circuits in the inventive apparatus by the information processing device 150 above are accomplished by the CPU 150a functioning as the control portion of the luminescence measuring apparatus in accordance with control program(s) read into CPU 150a. Fig. 3 shows an example of processes executed in CPU 150a which operates in the information processing device 150 as the control portion of the luminescence measuring apparatus in the form of a functional block diagram. In this regard, the CPU 150a is hereafter called as a control portion.

As understood from the drawing, in the information processing device 150, the control portion 150a is connected with a memory portion 150b, the clock generating portion 150c which clocks the time of the system, a communication interface portion 150d and an input/output interface portion 150e through bus line.

In the above-mentioned structure, the communication interface portion 150d interfaces communication between the control portion 150a and the various devices, such as the stage moving apparatus 50, illuminating device 90, compound addition device 110, image capturing device 130, equipped in the luminescence measuring apparatus as explained above, and transmits commands from the control portion 150a to the respective devices in the luminescence measuring apparatus, and receives data from each device and transmits them to the control portion 150a. The data communication circuits may be any of a wired or radio system. Further, Input/output interface portion 150e is an interface mediating communications of the control portion 150a with an input device 150f (, which may be an arbitrary device for inputting a user's command into the luminescence measuring apparatus, such as a keyboard and a mouse, or a monitor which cooperates a microphone and a mouse to achieve a pointing device function.) and an output device 150g (, which may be an arbitrary apparatus for enabling a user to recognize information, such as measured images and/or measurement results obtained with the luminescence measuring apparatus and the conditions of the apparatus, e.g., a TV monitor (a TV set for home use may be included), a speaker and a printer).

Memory portion 150b may be a storage medium, such as a memory device, such as RAM and ROM, a fixed-disk device, such as a hard disk, a flexible disk, an optical disk, etc., in which medium an image database 150b1, a luminescence measurement result file 150b2, and an induction/inhibition judgment result file 150b3 are stored. In the image database 150b1, there are stored "image set identifying information" for specifically identifying a pair of a luminescence image and an illumination image; a pair of a luminescence image and an illumination image; an acquisition time when each of the luminescence image and illumination image in the pair is acquired while these data are associated with one another (corresponding to the recording medium 157 in Fig. 2A). In the luminescence measurement result file 150b2, there are stored image set identifying information, an acquisition time, and a luminescence amount or a luminescence intensity from a measurement region measured by a luminescence measurement portion 150a11 as described later while associated with one another. Also, in the induction/inhibition judgment result file 150b3, a judgment result in an induction/ inhibition judgment portion 150a12 as described later is stored.

The control portion 150a has an internal memory (memory 155 in Fig. 2A) for storing control programs, such as OS (Operating System), programs determining various kinds of procedures and any requisite data and executes various processes based on those programs.

The processing portions established in the operations of the control portion 150a may be, for example, as follows:
Compound addition commanding portion 150a 1 -- commands the compound addition device 110 to perform an addition of a compound through the communication interface portion 150d.
Illuminating ON/OFF commanding portion 150a2 -- commands the illuminating device 90 to start (exposure ON) and stop (exposure OFF) the illumination through the communication interface portion 150d.
Image capture commanding portion 150a3 -- commands the image capturing device 130 to execute the image capturing through the communication interface portion 150d.
Image acquisition portion 150a4 -- acquires an image which has been transmitted from the image capturing device 130 (a luminescence image or an illumination image) through the communication interface portion 150d.
Image re-capture commanding portion 150a5 -- generates a superposition image by superposing a luminescence image and an illumination image acquired with the image acquisition portion 150a4, and requests a command of whether or not the re-capturing of images is required from a user who refers to the superposed image. In this regard, the image re-capture commanding portion 150a5 may be designed to request an command of whether or not the re-capturing of images is required, depending upon whether or not a desirable luminescent measurement sample 10 is covered in the captured region of a luminescence image acquired by the image acquisition portion 150a4.
Observation region defining portion 150a6 -- generates a superposition image by superposing a luminescence image and an illumination image acquired with the image acquisition portion 150a4, and requests a user to define a desired observation region in the superposed image. In this regard, when image re-capturing is commanded in the image re-capture commanding portion 150a5, the observation region defining portion 150a6 may make a user determine a desired observation region in a superposed image of a luminescence image and an illumination image acquired by the image acquisition portion 150a4 after the image re-capturing.
Shift amount calculation portion 150a7 -- when an observation region is determined by the observation region defining portion 150a6, it calculates a shift amount of the stage 30 such that the center of the field of view of the image capturing device 130 will be coincident with the center of the defined observation region.
Shift commanding portion 150a8 -- commands the stage moving device 50 to shift the stage 30 based on the shift amount calculated by the shift amount calculating portion 150a7 through the communication interface portion 150d.
Image storage portion 150a9 -- stores, in a predetermined storage area in the image database 150b1, a luminescence image and an illumination image acquired by the image acquisition portion 150a4 (including the luminescence image and illumination image which has been referred to when no image re-capturing is commanded in the image re-capture commanding portion 150a5) together with the acquisition times of the luminescence image and illumination image.
Measurement region determination portion 150a10 -- requests an observer (user) to determine a desired measurement region in a luminescence image stored in the image database 150b1 or a superposed image generated by superposing a luminescence image and an illumination image stored in the image database 150b1.
Luminescence measurement portion 150a11 -- measures a luminescence amount or a luminescence intensity from a measurement region, when determined by the measurement region determination portion 150a10, in each of luminescence images stored in the image database 150b1 individually.
Induction/inhibition judgment portion 150a12 -- judges, for the respective measurement regions, whether or not a predetermined compound has induced or inhibited an expression or a localization of a luminescent protein based on a luminescence amount or a luminescence intensity measured individually in the measurement regions by the luminescence measurement portion 150a11.

In this regard, the induction / inhibition judgment portion 150a12 may be constructed with the following processing portions:
Parameter calculation portion 150a121 -- calculates predetermined parameters (for example, IC50, half value, a rate constant, etc.) for the respective measurement regions based on a luminescence amount or a luminescence intensity measured in each measurement region by the luminescence measurement portion 150a11.
Parameter threshold judging portion 150a122 -- judges, for the respective measurement regions, whether or not a predetermined compound has induced or inhibited an expression or a localization of a luminescent protein based on parameters calculated for the respective measurement regions by the parameter calculation portion 150a121. The judgment may be executed such that, for example, when different kinds and/or concentrations of compounds providing stimuli are used, a change or a difference of luminescence amounts depending upon different kind and/or concentrations of compounds may be determined, or an appropriate kind and/or a concentration of compounds may be determined based on the luminescence amount data in the determined measurement regions.

### Operation of the Apparatus

Various operations of the inventive apparatus explained above are performed as described below.

### (1) Acquisition of an image of a measurement sample

As understood from the explanation above, a luminescence image of a measurement sample is acquired by capturing an image formed on the light receiving surface of the image capturing device 130 with the light emitted from the measurement sample owing to a bioluminescence phenomenon through the objective in a condition that the illuminating device 90 is switched off (exposure OFF). In the acquisition of the luminescence image, the image capturing device 130 captures an image of the measurement sample 10 under the control of the image capture commanding portion 150a3 in a condition that the illuminating device 90 is switched off under the control of the illumination ON/OFF commanding portion 150a2, and the captured luminescence image is transmitted to the information processing device 150 under the control of the image acquisition portion 150a4 and, associated with the time provided from the clock generating portion 150c. On the other hand, an illumination image of the measurement sample, as noted, is obtained by capturing, with the image capturing device 130, an image of the measurement sample 10 from the objective 70 in response to the control of the image capture commanding portion 150a3 in a condition that the illuminating device 90 is turned on under the control of the illumination ON/OFF commanding portion 150a2 (exposure ON), irradiating light on the measurement sample 10. Then, the captured illumination image is transmitted to the information processing device 150 under the control of the image acquisition portion 150a4 and associated with the time of the acquisition of the image provided from the clock generating portion 150c.

In this regard, as already described, in a case of measuring a luminescence phenomenon of a luminescent protein, the luminescence intensity is too feeble to be detected sufficiently as a light signal with an image capturing devices, such as a CCD camera, and thus, the internal structure of a cell is usually unobservable. Accordingly, it is hardly possible to adjust the focus of an objective while observing cells or the observation object in the sample, as done in normal microscopy. Thus, in the luminescence observation, the focus position of the objective may be determined based upon a microscopic illumination image of the measurement sample obtained in a transparent light observation, i.e. by illuminating the measurement sample through an illumination optical system with the light from a light source, such as a halogen lamp. For example, by setting the focus position of the objective to an approximate center position on the optical axis of the objective between two positions providing a high contrast image determined in a transmitted light observation prior to a luminescence observation, a clear luminescence image focused on the CCD camera is obtained when a luminescence intensity of a bioluminescence protein increases.

In some of the luminescence measurements and analyses in accordance with the inventive apparatus explained later, an illumination image and a luminescence image are acquired with being paired. Further, in order to track a variation with time of a luminescence amount or a luminescence intensity from a measurement sample, for example, as illustrated in Fig. 4A, illumination images and luminescence images may be captured alternatively in plural times in accordance with a program of setting an image acquisition period T, an exposure time t and an image-capturing time interval ΔT.

Then, the acquired luminescence image and illumination image may be stored in a predetermined storage area in the image database 150b1 together with the acquisition times by the process of the image storage portion 150a9.

### (2) Addition of a compound

When an arbitrary predetermined compound is to be added to a measurement sample, a command of the execution of addition of the compound is given through the communication interface portion 150d to the compound addition device 110 by the process of the compound addition commanding portion 150a1 in the control portion 150a, and in response to this, the compound of a predetermined amount is added into the container 11 with the compound addition device 110.

### (3) The defining of an observation region

In the inventive apparatus, prior to the acquisition of an image for a luminescence measurement, an observation region within the measurement samples 10 in the container 11 on the stage, i.e. a place which a user wants to observe in the measurement sample for the subsequent luminescence measurements may be set up. When an observation region is determined, the stage is moved such that the determined observation region is located in the approximate center of the field of view of the image capturing device 130 in the acquisition of an image for a luminescence measurement. As understood for one skilled in the art, in general, an image on and around an optical axis is bright and less distorted in a field of view of an optical microscope, and therefore, by bringing a region to be observed to the center of a field of view, a good microscopic image will be acquired. Further, it should be understood that, through this determination of an observation region, it becomes possible to acquire an image meaningful in a luminescence measurement, namely, an image of a region in which luminescence is seen for measurement of a luminescence amount or a luminescence intensity.

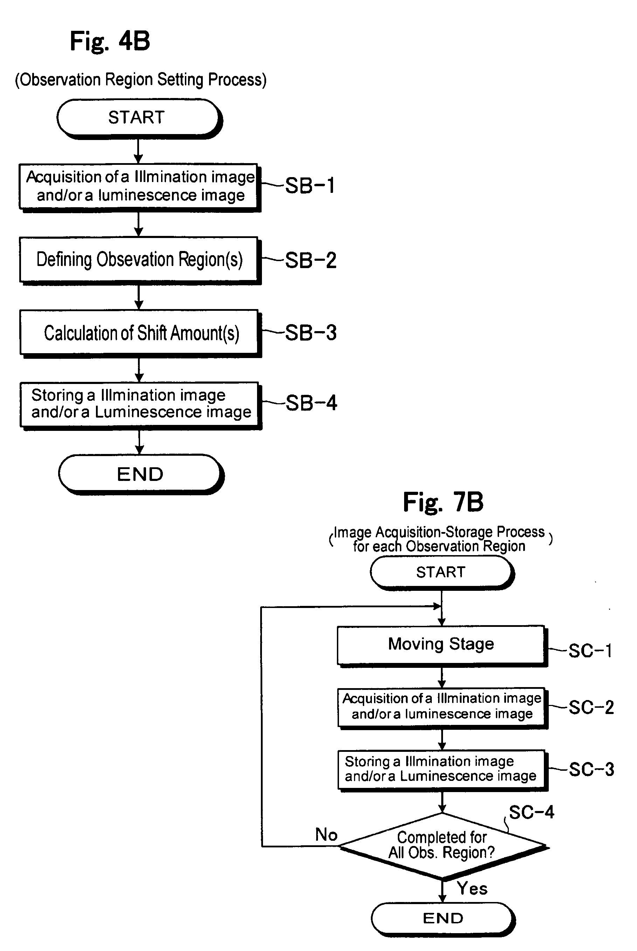

For instance, the setting-up of an observation region may be executed in accordance with processes as shown in the form of flowchart in Fig. 4B. Referring to the drawing, in the setting-up of an observation region, first, an acquisition process of an illumination image and a luminescence image of the measurement sample 10 is performed as described above (SB-1). In the acquisition of the illumination image, the illuminating device 90 is turned on, and after the completion of acquisition of the illumination image, the acquisition of the luminescence image is performed after turning off the illuminating device 90. In this regard, the acquisition of a luminescence image may be done only when a luminescence has already occurred in the measurement sample, e.g. by addition of a compound as described above (Thus, if luminescence is inhibited by addition of a compound, the acquisition of a luminescence image will be performed without adding a compound.).

When the acquisitions of the luminescence image and illumination image are completed, a superposed image of the illumination image and the luminescence image is generated through the process of the observation region definition portion 150a6, which requests a user to determine at least one or more observation region(s) in the image (SB-2). In this process, a superposed image, generated by the process of the observation region defining portion 150a6 is displayed on the output device 150g, and the information processing device 150 will be in a standby state until an observation region is defined through the input device 150f. When the user inputs at least one or more desired observation region in the image displayed on the output device 150g through the input device 150f, the defined region is set as an observation region. In this regard, such an observation region may be defined, for example, with a rectangle, a circle, an ellipse, a polygon, etc.

When at least one observation region is defined, the position coordinate data of the defined observation region are acquired on the superposition image for each observation region by the process of the shift amount calculation portion 150a7, and a directional vector from the position coordinate values of the center of the observation region to the position coordinate values of the center of the image region of the superposition image is calculated (SB-3). In the subsequent processes, this directional vector is used for moving the stage such that the center of the field of view of the image capturing device 130 can be coincident with the center of each defined observation region, prior to capturing the image in the acquisition of a luminescence image and an illumination image for a luminescence measurement.

Then, the image acquired for the setting-up of the above-mentioned observation region is stored in a predetermined storage area of the image database 150b1 by the process of the image storage portion 150a9 (SB-4), and the process of setting up the observation region(s) is completed.

When an observation region is determined as above, in the process of acquiring images of the measurement sample for a luminescence measurement, the stage moving devices 50 operate to shift the stage 30 based on a shift amount or a directional vector calculated in Step SB-3, prior to capturing an image, under the control of the shift commanding portion 150a8, such that the defined observation region is positioned in the approximate center of the field of view of the image capturing device 130. When plural observation regions are defined, the stage is moved such that each observation region is positioned in the center of the field of view of the image capturing device before the capturing of the image of the measurement sample for a luminescence measurement of the corresponding observation region.

### (4) Determination of a measurement region

The inventive apparatus is designed such that a luminescence amount or a luminescence intensity of only a specific region ("measurement region": ROI) in the acquired luminescence image can be computed, and thereby, a user is allowed to detect a luminescence amount or a luminescence intensity of a biological sample to be observed (e.g. a cell or a part of a cell etc.) in a luminescence image, and to track a variation with time of the luminescence amount or luminescence intensity.

In the process of determining a measurement region, first, a superposition image is generated by superposing a luminescence image and an illumination image in at least one set within a series of sets of luminescence images and illumination images stored in the image database 150b1 (for example, the set of the luminescence image and illumination image acquired at the earliest time) through the process of the measurement region determining portion 150a10 in the control portion 150a, and the resultant superposition image is displayed on the output device 150g. In generating the superposition image, the brightnesses of an illumination image or a luminescence image may be adjusted to optimize a superposition image.

Referring to the displayed superposition image, the user determines a desired measurement region thereon through the input device 150f. A measurement region can be determined, for example with a rectangle, a circle, an ellipse, a polygon, etc. Moreover, in the determination of a measurement region, morphological information of a measurement sample 10 (for example, a projection, a cirrus, etc.) may be used. Also, in determining a measurement region, superposition images may be displayed together with a time progress or in animation on the output device 150g as shown in Fig. 4C. In the example of Fig. 4C, for instance, the superposition images of stored illumination images and luminescence images are displayed with the acquisition times (T1, T2, T3, T4), and, in accordance with such an animation display, it can be checked that the luminescence amount of the cell in the region No. 1 is increasing with time, so that the determination of the region for the measurement of a luminescence amount or a luminescence intensity becomes easy. In this regard, plural measurement regions can be determined.

When a measurement region(s) is(are) determined on an image, the position coordinates of the range of the region for each measurement region are determined.

### (5) Measurement of a luminescence amount or a luminescence intensity

When a measurement region is determined as described above, a luminescence amount or a luminescence intensity is computed from the intensities of the pixels in the corresponding region on a luminescence image, using the position coordinates of the measurement region through the process of the luminescence measurement portion 150a11, and stored in a predetermined storage area of the luminescence measurement result file 150b2. When plural measurement regions are determined, a luminescence amount or luminescence intensity is computed in each measurement region. Further, when plural luminescence images exist, luminescence amounts or luminescence intensities of regions corresponding to the measurement region in the respective images may be computed, and the resultant values may be displayed in a graphical form on a screen (see explanation of the operation screen described below). For instance, in the example of Fig. 4C, when cell 1 is an measuring object (the cell 1 has been specified), luminescence intensities are computed from the intensities of pixels of the region (of a luminescence image) surrounded in the dotted line in the drawing in a series of the images, and the variation with time of the luminescence intensity may be displayed in a graph form as shows in Fig. 4D. From such a graph, knowledge of a variation with time of transcription of a luminescent protein gene can be acquired.

### (6) Analysis of a measurement result

In the inventive apparatus, through the process of the induction / inhibition judgment portion 150a12 using the variation with time as described above, various analyses can be conducted, e.g. a judgment of an induction of an expression and a localization or an inhibition of an expression of a luminescent protein gene with a stimulus of a certain compound or other stimuli.

In the analysis of the detected results of a luminescence amount or a luminescence intensity, predetermined parameters, such as IC 50, half value, a rate constant of a luminescence intensity variation with time, difference of luminescence time, etc. are computed based on a luminescence amount or a luminescence intensity through the process of the parameter calculation portion 150a121 in the induction/inhibition judgment portion 150a12, and the computed parameters are compared with a predetermined threshold, and, an induction of an expression and/or a localization or an inhibition of an expression of a luminescent protein gene is judged through the process of the parameter-threshold judging portion 150a122.

For example, for investigation of speed at which a certain compound induces or inhibits an expression of a luminescent protein, the half value of the maximum of a luminescence amount or a luminescence intensity after adding the compound to a measurement sample is computed as well as the time when the luminescence amount or luminescence intensity is at the half value from the above-mentioned temporal measurement result of a luminescence amount or a luminescence intensity, and the judgment of the presence of an induction or an inhibition of an expression of a luminescent protein is performed through the comparison of the computed result value with a predetermined threshold in the process of the parameter-threshold judging portion 150a122.

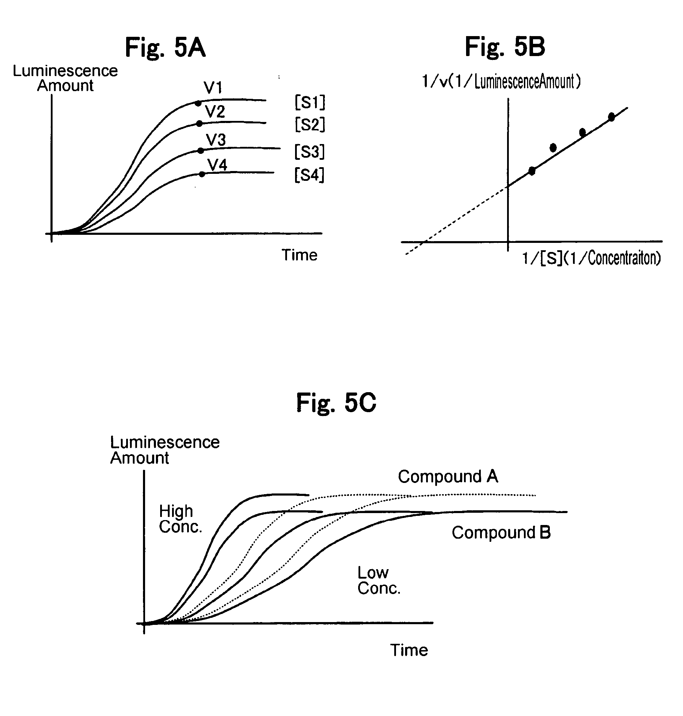

Moreover, for judging an induction or an inhibition of an expression of a luminescent protein owing to a certain compound from a reaction rate constant, for instance, the reaction rates (V) at various concentrations are computed from the results obtained by measuring the luminescence amount with the present apparatus while changing the concentration (S) of the added compound as shown in Fig. 5A, in the process of a parameter calculation portion 150a121. Then, in accordance with the reciprocal plot of Michaelis-Menten equation (Lineweaver-Burk plot; 1/V=Km/Vmax x 1/S + 1/Vmax), "1/V" is plotted against "1/S" as shown in Fig. 5B, so that the rate constant Km can be computed from the solution concentration at 1/V= 0 obtained with the straight line recursion. And through the process of the parameter threshold judging portion 150a122, the judgment of induction or inhibition is performed through the comparison of the computed rate constant with a predetermined threshold.

Alternatively, as shown in Fig. 5C, variations with time of the luminescence amounts for two different compounds at various concentrations can be individually measured with the present apparatus, and the judgment of induction or inhibition may be done based upon those measurement results.

The various judgment results as described above may be stored in a predetermined storage area of the induction / inhibition judgment result file 150b3.

### Operation screen

On the TV monitor or output device 150g, operation screens as illustrated in Fig. 6 A-E are displayed, allowing a user to provide commands to the luminescence measuring apparatus by selecting regions or buttons on the operation screens explained below, respectively. Further on the operation screens, there are displayed luminescence images, illumination images and their superposition images thereof, an animation, measurement results of luminescence amounts or intensities and the results of analysis thereof with respect to the measurement sample 10, and thereby a user is allowed to confirm various measurement results. In the followings, some exemplary operation screens displayed on the TV monitor or output device 150g are explained in detail. In this regard, the respective operation screens shown below provide a GUI (graphic user interface) easily operable for a user, in order to accomplish the concept of the present invention appropriately.

### Start menu screen-Figs. 6A and 6B

On the start menu screen, the following regions are displayed so that a user can input condition parameters of a luminescence measurement.

### Region MA1 -- Menu items for the container 11:

Region MA11 -- Button for commanding use of a laboratory dish;
Region MA12 -- Button for commanding use of a micro plate, and setting the numbers of wells of a micro plate (for example, 8, 12, 24, 96, etc.);
Region MA13 -- Button for confirming the conditions of region MA11 and region MA12 being pushed or not and the parameters which have been set.

### Region MA2 -- Menu items for the dispensing device 110:

Region MA21 -- Button for commanding the setting of an amount to be dispensed (amount of a reagent (µl, ml));
Region MA22 -- Button for commanding the setting of dispensing time;
Region MA23 -- Button for commanding the setting of concentration of a reagent;
Region MA24 -- Button for confirming the conditions of region MA21 to region MA23 being pushed or not and the parameters which have been set.

In this regard, the dispensing time can be set e.g. at the time immediately after a measurement start, at the time of the cultivation start of a measurement sample, or at the time before a microscope observation if it is predicted that the response to the reagent is slow. Also, when a culture solution has been determined, since the concentration of a reagent will be automatically determined if the amount to be dispensed is inputted in region MA21, the setting of region MA23 is optional.

### Region MA3 -- Menu items for the incubator 12:

Region MA31 -- Button for commanding a start of a heater operation;
Region MA32 -- Button for commanding an end of a heater operation;
Region MA33 -- Button for commanding an injection of CO₂ mixed gas;
Region MA34 -- Button for confirming the conditions of region MA31 to region MA33 being pushed or not.

In this regard, a heater may be put on the objective, the container, the water bath where the container is laid, and a transparent lid covering the container.

### Region MA4 -- Menu items for an observed image:

Region MA41 -- Button for commanding the setting of the magnification power of the objective;
Region MA42 -- Button for confirming the condition of region MA41 being pushed or not and the parameter which have been set.

In this regard, the magnification power of an objective may be selectable, for example, from 10 times, 20 times, 40 times, 100 times, etc.

### Region MA5 -- Menu items for discriminating luminescence by color:

Region MA51 -- Button for commanding the setting of color filters;
Region MA52 -- Button for commanding use of a dichroic mirror;
Region MA53 -- Button for confirming the conditions of region MA51 and region MA52 being pushed or not and the parameters which have been set.

A color filter may be selectable from a red filter, a green filter, etc., for example. In measuring a luminescence amount or a luminescence intensity using two kinds of genes, the button of region MA51 or region MA52 will be pushed.

### Region MA6 -- Menu items for the CCD camera 130

Region MA61 -- Button for commanding the setting of a sensitivity of the CCD camera
Region MA62 -- Button for commanding the setting of a gain of the CCD camera
Region MA63 -- Button for commanding the setting of an exposure time of the CCD camera
Region MA64 -- Button for confirming the conditions of region MA61 to region MA63 being pushed or not and the parameters which have been set.

### Region MA7 -- Menu items for image acquisition conditions

Region MA71 -- Button for commanding the setting of an image acquisition period T;
Region MA72 -- Button for commanding the setting of a total exposure time t in capturing a pair of an illumination image and a luminescence image;
Region MA73 -- Button for commanding the setting of time interval ΔT from a start of capturing a pair of an illumination image and a luminescence image to the next start of capturing a pair of an illumination image and a luminescence image;
Region MA74 -- Button for confirming the conditions of region MA71 to region MA73 being pushed or not and the parameters which have been set.

The image acquisition period T, the exposure time t and the time interval ΔT are illustrated in Fig. 4A.

### Region MA81 -- Button for commanding a measurement start.

Among the buttons of the above-mentioned start menu screen, when a button which requires the input of a parameter is pushed on, a parameter input screen as illustrated in Fig. 6B is displayed on the output device 150g. On this parameter input screen, when a user inputs a text into region MB1 using the input device 150f and region MB21 is pushed on, the text inputted into the region MB1 is confirmed. Thus, according to the start menu screen as described above, command buttons for arbitrarily selecting or choosing a stimulus method and image acquisition condition are comprehensively displayed in the GUI representation form, so that a stimulating method and an image data acquisition optimal for a measurement item can be easily commanded on the screen.

### Image monitor menu screen-Figs. 6C and 6D

In the image monitor menu screen, images (Fig. 6C) and results of analyses, such as an animation and a graph (Fig. 6D), are displayed on Region MC4 as in the drawings. An image of a measurement sample observed in the field of view of a microscope during a luminescence measurement is displayed on a region MC4 so that it can be confirmed whether or not a desired image is acquirable, and thereby a user can check whether or not the desired image is acquirable in the initial stage during a measurement term continuing for a long period, such as two, three days, and the efficiency of an experiment can be improved. Furthermore, the user can provide various commands to the luminescence measuring apparatus by selecting a button as explained below.

In the image monitor menu screen, the following items are displayed and selectable:
Region MC11 -- Button for commanding the display of an image(s) onto region MC 4;
Region MC12 -- Button for commanding the display of an illumination image(s);
Region MC13 -- Button for commanding the display of a luminescence image(s);
Region MC14 -- Button for commanding the display of a superposition image(s) of an illumination image and a luminescence image;
Region MC15 -- Button for confirming the conditions of region MC12 to region MC 14 being pushed or not.
Region MC21 -- Button for commanding the determination of the position of an observation region and the position of a measurement region;
Region MC22 -- Button for confirming the position of a region displayed on region MC 4;
Region MC 31 -- Button for commanding the display of a graph of variation with time of a luminescence amount or a luminescence intensity (analysis);
Region MC32 -- Button for commanding the display of a luminescence amount;
Region MC 33 -- Button for commanding the display of luminescence intensity;
Region MC 34 -- Button for confirming the conditions of regions MC32 and MC33 being pushed or not;
Region MC 51 -- Button for commanding the display of the number of frame of an image currently displayed on region MC 4;
Region MC 61 -- Cross operated button for moving the stage horizontally (in the upward, downward, leftward and rightward directions on the screen) (thereby, the position observed in the container 11 on the stage is movable.)
Region MC71 -- Button for commanding the forwarding or rewinding of the image displayed on region MC 4 (forwarding by frame, forwarding or rewinding of images);
Region MC 81 -- Button for commanding the shift to Data analysis menu screen (Fig. 6E);

In the above-mentioned image monitor menu screen, when any of buttons from MC12 to MC14 is pushed; subsequently the button of region MC 15 is pushed, and finally the button of region MC11 is pushed, then, the image corresponding to the pushed one among region MC12 to region MC14 will be displayed on region MC 4 with a frame number, as shown in Fig. 6C. For example, in Fig. 6C, one illumination image and two luminescence images are displayed on region MC 4. In this connection, when a measurement sample is observed with two colors (green: 510 nm, red: 610 nm) as in the system of Fig. 1D, two luminescence images may be displayed. Further, when the observation is done with one color, one luminescence image will be displayed. In addition, when the button of region MC21 is pushed, a frames (for example, a rectangle, a circle, an ellipse, a polygon, etc.) is displayed on a predetermined position in region MC4, and a "measurement region", whose luminescence amount or luminescence intensity will be computed, is determined. In this regard, plural measurement regions may be determined.

After the "measurement region" has been determined, when the button of region MC32 or region MC33 is pushed; its selection by the pushing of the button of region MC 32 or region MC 33 is confirmed by pushing the button of region MC34; and the button of region 31 is pushed, then, using images stored in the image database 150b 1 during a measurement, a luminescence amount or a luminescence intensity of the place determined as the measurement region is displayed individually for each determined measurement region in a graph form on region MC4 as shown in Fig. 6D, (the graph may be of a variation with time of a relative luminescence amount or luminescence intensity.). Thus, on the screen as illustrated in Fig. 6C, by determining a measurement region and commanding a data display, it becomes possible to read out and analyze images in the image database 150b1 together with the continuing of image acquisition. Furthermore, since a measurement sample in a place that a user desires to observe is specified and cut out from an acquired image and a variation with time of a luminescence amount thereof is represented in a graph form, whether or not the measurement is successfully performed can be checked at an earlier stage. Accordingly, in the image monitor menu screen as described above, command buttons for arbitrarily selecting a display format in accordance with a stimulus method are comprehensively displayed in a GUI form, so that an optimal result display can be commanded easily on the screen for each measurement item.

### Data analysis menu screen-Fig. 6E

In a data analysis menu screen, a variety of analytical methods and display methods using a luminescence amount or a luminescence intensity in the acquired luminescence images can be specified. The representation selected or specified on this screen is displayed on the image monitor menu screen, and/or outputted to an output device, such as a printer. In the data analysis menu screen, the following items may be displayed and selectable.
Region MD11 -- Button for commanding the display of an image selected in either of region MD 12 to region MD 14 on the image monitor menu screen;
Region MD 12 -- Button for commanding the display of an illumination image;
Region MD13 -- Button for commanding the display of a luminescence image;
Region MD14 -- Button for commanding the display of a superposition image of an illumination image and a luminescence image;
Region MD 15 -- Button for confirming the conditions of region MD12 to region MD14 being pushed or not (When the button of region MD15 is pushed after pushing the button of any of region MD12 to region MD 14, and finally the button of MD11 is pushed, then, the image specified in any of region MD12 to region MD 14 will be displayed on the output device 150g.);
Region MD21 -- Button for commanding the setting of animation of images, e.g., fast forward speed of images (frames/min.), etc., following a manner specified in region MD22 to region MD23,;
Region MD22 -- Button for commanding the display of all images stored in the image database 150b1;
Region MD23 -- Button for commanding the intermittent display of images strored in the image database 150b1 (for example, images chosen successively every five frames or every ten frames are displayed);
Region MD24 -- Button for confirming the conditions of region MD22 and region MD23 being pushed or not and the parameters which have been set (When the button of region MD24 is pushed after pushing the button of region MD22 or region MD23, and finally the button of region MD21 is pushed, then, images will be displayed in animation on the output devices 150g in a manner specified in region MD22 or region MD23.)
Region MD 31 -- Button for commanding the determination of an observation region or a measurement region;
Region MD 32 -- Button for confirming the position of the region being displayed on the output device 150g;
Region MD 41 -- Button for commanding the display of the line, selected in either of region MD42 or region MD43, in the graph displayed on region MC4 of Fig. 6D;
Region MD 42 -- Button for commanding the display of the line for a half value;
Region MD 43 -- Button for commanding the display of the line for an IC50;
Region MD 44 -- Button for confirming the conditions of region MD 42 and region MD 43 being pushed or not (When the button of region MD 44 is pushed after pushing the button of region MD 42 or region MD 43, and finally the button of region MD 41 is pushed, the lines indicating a half value as shown in Fig. 6F (The line of the luminescence amount indicating a half value and the line of the time indicating the half value) are displayed on a graph displayed on region MC 4 of Fig. 6D.);
Region MD 51 -- Button for commanding the outputting (e.g., displaying, printing) of a graph of a variation with time of a luminescence amount in a determined measurement region, a half value, a rate constant, etc. to the output device 150g (When region MD 51 is pushed, data, such as a graph of a variation with time of a luminescence amount of a determined region, a half value, a rate constant, are outputted (displayed, printed) to the output device 150g, and are stored in a predetermined storage area of the memory portion 150b.).

Accordingly, in the data analysis menu screen, command buttons required for data analyses are comprehensively represented in a GUI form, so that an optimal data analysis can be easily commanded on the screen for each measurement item.

It should be understood that the above-mentioned various operation screens (from Fig. 6A to Fig. 6E) are for illustrations of screen structures displayed on the TV monitor 150g of the luminescence measuring apparatus and that an operation screen may be arbitrarily designed by one of ordinary skill in the art, and also, arbitrary analyses of a luminescence amount or a luminescence intensity as described above may be performed and displayed.

### Luminescence measurement and analysis with the inventive apparatus

According to the inventive apparatus explained above, as noted in the column of "Disclosure of Invention", it becomes possible to measure amounts or intensities of light emitted owing to the bioluminescence phenomenon in arbitrary biological samples, such as living tissues, cells, biological individuals, etc., in which a gene expressing a luminescent protein has been introduced into a predetermined site, individually in the respective specific regions of tissues, cells or specific biological individuals to be observed. Moreover, in the illustrated embodiment of the inventive apparatus, a device for adding an arbitrary compound to a measurement sample is equipped, and under the control of the information processing device, the timing of adding a compound, and the timing of capturing an image of the measurement sample are controllable, so that it is possible to catch a variation with time of a gene expression caused with a compound from the time of the addition of the compound. Also, in the embodiment of the inventive apparatus, it is possible to integrally execute from the measurement of a luminescence amount or a luminescence intensity to the judgment of whether or not a certain compound caused an expression or a localization of luminescent protein or their inhibition based upon the results of the measurement. In the followings, the embodiments of the luminescence measurement of a biological sample and its analysis in accordance with the present invention by means of the inventive apparatus are explained.

### Measurement sample

In the luminescence measurement of a biological sample in accordance with the present invention, a measurement sample 10 may be an arbitrary biological sample, such as a living tissue, a cell, a biological individual, etc., in which a luminescent protein gene has been introduced into a predetermined site. The introduction of the luminescent protein gene into a biological sample may be carried out by introducing, into a cell, a plasmid vector including at least a fusion gene which is made fused with the luminescent protein gene in accordance with arbitrary gene transfection technique. In performing so-called a reporter assay, typically, cells into which a reporter vector including luciferase gene in the position of a targeted gene has been introduced are used for the measurement sample 10 (As an example for such a cell, e.g. a HeLa cell in which the plasmid including a luciferase gene connected with an expression vector having Tetracycline operator (Tet02) "pcDNA4/TO" (from In vitro gene co.) and a vector constantly expressing Tetracycline repressor (TetR) "pcDNA6/TR" (from In vitro gene co.) have been co-expressed. See Example.). Further, the measurement sample 10 may be one into which, in addition to the luciferase gene, a housekeeping gene and a SV40 promoter gene, not influenced by reagent application has been introduced.

When a luciferase is employed as a luminescent protein, luciferin, the substrate of luciferase, is added into a culture solution in a container 11. In this regard, in order to avoid extinction of the measurement sample 10 during the measurement, preferably, for example, the container 11 is placed under the environment where a temperature, humidity, N₂ atmosphere, etc. are adjusted for making the biological sample in the measurement sample alive.

### Procedure of a luminescence measurement and analysis

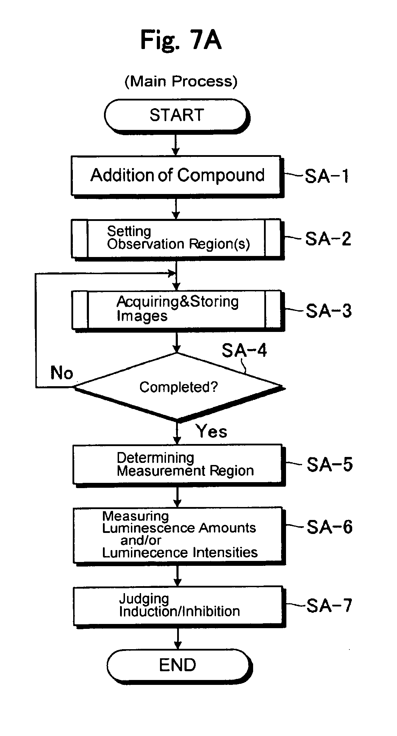

Fig. 7A shows exemplary procedures in a flowchart form according to the present invention from a luminescence measurement when a certain arbitrary compound is given to a measurement sample until a judgment of presence or absence of induction or inhibition of an expression of the luminescence gene in the sample owing to the compound.

Referring to the drawing, first, at the start of a luminescence measurement in accordance with the present invention (start), a container 11 including a measurement sample 10 in a culture solution containing a luminescence substrate is laid on the stage 30, and, on the start menu screen displayed on the TV monitor or output device 150g, various measurement conditions as mentioned above are set up through the input device 150f. Then, when a user selects the start button on the operation screen, the luminescence measuring apparatus 1 will start operations.

In the illustrated flow chart, first, the addition of a predetermined compound by a predetermined amount into the container 11 is executed with the compound addition device 110 (step SA-1). In this connection, it should be understood that the addition of the compound may be done before setting the container 11 on the stage 30, or alternatively, after the starting of the operation of an image acquisition of the measurement sample.

Next, in the illustrated flowchart, before the image acquisition for the luminescence measurement, an observation region of the measurement samples 10 in the container 11 on the stage, namely a place which a user wishes to observe in the subsequent luminescence measurement of the measurement sample may be set (SA-2). The setting of the observation region may be done as in the explanation of the operation of the inventive apparatus with respect to Fig. 4B.

Then, when the setting of an observation region is completed, acquiring and storing of luminescence images and/or illumination images for detecting or measuring the luminescence amount or luminescence intensity of the measurement sample 10 are executed (Step SA 3: image acquisition and storage processing for each observation region). As noted, when a variation with time of the luminescence amount or luminescence intensity of the measurement sample 10 is tracked, the image acquisition process is repeated with a time interval set up in the start menu by an arbitrary number of times or for an arbitrary term as illustrated in Fig. 4A. Also, when plural observation regions are defined, an acquisition of an illumination image and a luminescence image is executed for each of all the defined observation regions in one image acquisition process.

Fig. 7B shows exemplary processes of acquisition and storage of illumination image(s) and luminescence image(s) in one image acquisition procedure in a flowchart form.

Referring to the drawing, in the image acquisition and storage process for each observation region, first, as described above, the moving devices 50 operate to move the stage 30, based on the shift amount or directional vector calculated in Step SB-3 under the control of the shift instructing portion 150a8, bringing the observation region set up in SA-2 to the approximate center of the field of view of the image capturing device 130(step SC-1), and then, the capturing of an illumination image and a luminescence image and the storing of the image data into a recording medium are executed(step SC- 2, step SC-3). In this regard, as understood from the above-mentioned description, images of the sample under the measurement may be displayed on TV monitor 150g during the image capturing and storing.

In a case where plural observation regions are determined, after a completion of the image acquisition of a certain observation region, a different observation region is moved to the center of the field of view, and , an image acquisition is performed in the same way as described above (step SC-4). This operation is performed until the completion of the image acquisitions for the whole observation regions.

As already described, the image acquisition process shown in Fig. 7B is repeated with a time interval, by an arbitrary number of times and for an arbitrary term, set up in the start menu. Then, when the image acquisitions of the set-up number of times are completed; when a determined term has passed since the time of starting the measurement; or when the luminescence intensity in a luminescence image exceeds a predetermined value, the whole image acquisition processes are completed (Fig. 7A: SA-4).

After the completion of the image acquisition process, as noted, a determination of a measurement region whose luminescence amount or luminescence intensity is to be measured (SA-5); a measurement of a luminescence amount or a luminescence intensity (SA-6); and a judgment of induction and inhibition of an expression of a luminescent protein (SA-7) are carried out in the acquired luminescence images by using functions of the above-mentioned inventive apparatus.

Thus, as understood from the explanations above, according to the embodiment of the inventive luminescence measuring apparatus illustrated here, there are integrally performed a series of processes: adding a predetermined compound to a measurement sample 10; repetitively acquiring and storing illumination images and luminescence images including the measurement sample 10, for instance, for a predetermined time and with a predetermined time interval over a predetermined period; determining a desired measurement region in the stored illumination images and luminescence images; measuring luminescence amounts and/or a luminescence intensities from the determined measurement region based on the stored luminescence images; and judging, from the results, whether or not the compound caused an induction or an inhibition of an expression or a localization of the luminescent protein in the measurement sample 10. It should be noted that, even when plural cells, tissues, or biological individuals are included in a measurement sample 10, a user can determine a desired measurement region in a luminescence image while checking positions and morphologies of the respective individual measurement samples, and therefore not only following a luminescence amount of one certain cell or else with time progress but also any judgment requiring positional information such as the judgment of localization of luminescent proteins, will become performable. In a case of a conventional technique where a luminescence signal is measured in a cell solution or where no luminescent site could be determined, the presence of localization of luminescent protein and its variation with time are principally undetectable.

### Reporter assay using the inventive apparatus

According to the inventive luminescence measuring apparatus 1, as noted, a reporter assay using a luminescent protein can be carried out while the respective conditions of individual biological samples, such as cells, tissues or biological individuals, can be checked, and thereby the judging of an induction or an inhibition of gene expression, due to a compound, in a biological sample, will be done irrespective of the efficiencies of introduction and expression of a luminescent protein gene.

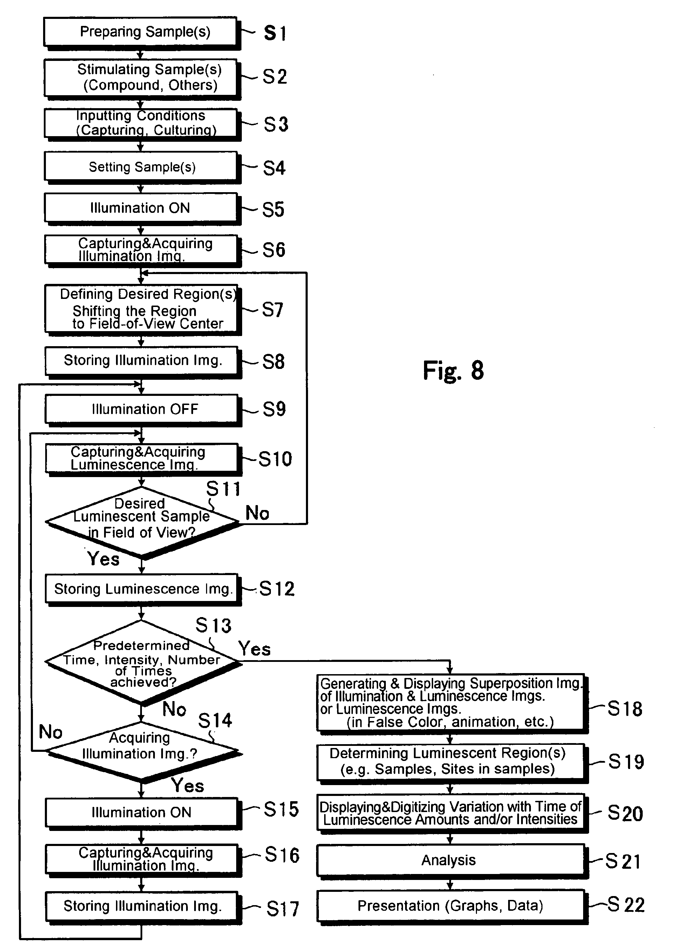

Fig. 8 shows exemplary operational processes for a reporter assay carried out with the luminescence measuring apparatus 1 in a flowchart form (The operational processes illustrated here are different from those illustrated in Fig.7A.).

Referring to the drawing, first, a measurement sample 10 is prepared (step 1). The measurement sample may be an arbitrary biological sample as already described, including such as one or more living tissue(s), one or more cell(s), one or more biological individual(s), etc., in which a luminescent protein gene has been introduced into a predetermined site. Then, the prepared measurement sample 10 is put into a laboratory dish 11 having been supplied with a culture solution, and a predetermined amount of a compound to be tested is added into the laboratory dish (step 2), whereby a stimulus is given to the measurement sample 10 in the laboratory dish 11. In addition, preferably, the time of giving the stimulus is memorized in the predetermined image database 150b1.

Next, various conditions of image capturing and cultivation of the sample, etc., listed in the start menu screen displayed on the TV monitor or output device 150g, are set up by a user through the input device 150f (step 3). And, when the start button on the start menu screen is pushed, the processes of a luminescence measurement and analysis as described below are started in the luminescence measuring apparatus 1. In this connection, the stimulation of the sample (step 2) may be executed after the input of the conditions of image capturing and sample cultivation(step 3). In this case, the time from stimulating the sample to the start of image capturing or acquisition illumination image can be shortened so that a real-time detection becomes possible.

When the process of a luminescence measurement and analysis is started, in step 4, the laboratory dish 11 is laid on a predetermined position on the stage 30 of the luminescence measuring apparatus 1. In this regard, the inventive apparatus may be equipped with a stacker robot, although not shown, which operates, in accordance with the process of a control portion 150a, to move the laboratory dish 11 to a suitable position on the stage when the laboratory dish 11 is put on the predetermined position of the inventive apparatus, and thus, in this case, at the start of the process of a luminescence measurement and an analysis of the luminescence measuring apparatus 1, there will be executed an operation in which the stacker robot will move and set the laboratory dish 11 to the predetermined position on the stage 30 in accordance with a command from the control portion 150a (step 4).

When the laboratory dish 11 is set on the stage as above, then, a determination of an observation region and the moving of the stage for bringing the determined observation region to the center of the field of view are executed (Step 5-11).

In these processes, the light source 90 is turned on in accordance with the process of the illuminating ON/OFF commanding portion 150a2, and thereby the illumination light is applied onto the measurement sample 10 (step 5), and the CCD camera 130 captures an illumination image including a measurement sample 10 in accordance with the image capture commanding portion 150a3. The captured illumination image is transmitted to the information processing device 150, and is displayed on the TV monitor through the process of the image acquisition portion 150a4.

Then, when the user defines a desired observation (monitoring) region in an illumination image acquired in step 6 in accordance with the process of the observation defining portion 150a6, the shift amount of the stage 30 is calculated so that the center of the observation region defined by the observation area defining portion 150a6 can be coincident with the center of the field of view of the CCD camera 130 through the process of the shift amount calculation portion 150a7, and the stage moving device 50 is driven to move the stage 30 in accordance with the command of the shift commanding portion 150a8 based on the shift amount (step 7). Then, the illumination image captured and acquired in step 6 is stored in a predetermined storage area in the image database 150b1 through the process of the image storage portion 150a9 (step 8).

After the observation region is moved to the center of the field of view based upon the illumination image as described, the light source 90 is switched off by the process of the illuminating ON/OFF commanding portion 150a2 (step 9), and the CCD camera 130 captures an luminescence image including the not illuminated measurement sample 10 in accordance with a command from the image capture commanding portion 150a3. The captured luminescence image is transmitted to the information processing device 150 through the process of the image acquisition portion 150a4 (step 10), and displayed on the TV monitor 150g. In this process, preferably, the time of starting the image capturing for a luminescence image is memorized with being associated with the time of stimulation memorized in the image database 150b1, and thereby a precise calculation of the variation in the luminescence based on the stimulation will be possible.

Then, in accordance with the process of the image re-capture commanding portion 150a5, the information processing device 150 requests the user to confirm if a desirable luminescent measurement sample 10 is included in an image capturing region (corresponding to the field of view of the CCD camera 130) of the luminescence image captured and acquired in step 10, and if "not included" is judged (step 11: No), the re-defining of the observation region, the re-shifting of the stage and the re-acquisition of a luminescence image will be performed. These processes may be repeated until the user judges that the desirable measurement sample 10 "enters in" a luminescence image.

When the user judges that the desirable measurement sample 10 "enters in" a luminescence image, the observation region is determined while the luminescence image at that time is determined as the first luminescence image for the luminescence measurement, and stored in a predetermined storage area of the image database 150b1 through the process of the image storage portion 150a9 (step 12). And, the image capturing or acquisition, and storage of a luminescence image for a luminescence measurement are repeated until the term for imaging or the number of times of image capturing, which are set up in step 3, are achieved (step 13, step 10-12). Also, when the luminescence intensity in the luminescence image stored in step 12 exceeds a predetermined value, the acquisition of luminescence images may be ended.

Moreover, in the above-mentioned process of acquiring luminescence images, as already described, since an illumination image is also acquirable in the inventive apparatus, an illumination image which is made paired with a luminescence image may be captured, acquired and stored. In this case, after continuation of acquisition of luminescence images is judged in step 13, whether or not an illumination image is to be acquired is confirmed, and if "to be acquired" is confirmed (step 14: Yes), the light source 90 is turned on (step 15) and image capturing, acquisition, and storage of an illumination image are executed (step 15-17), and after these, the light source 90 is switched off (step 9), and, capturing and acquisition of a luminescence image (step 10) are executed. In this regard, the judgment of whether or not an illumination image is to be acquired (step 14) may be determined previously by the input at the time of the start, or alternatively, when a movement of the sample is observed in the monitoring of images of the measurement sample 10 under the measurement, it may be judged that an illumination image is to be acquired.

Then, when the acquisition of luminescence images (and illumination images) is completed, various image processings and analyses will be executed using the acquired images (step 18-22).

In these processes, first, through the process of a measurement region determination portion 150a10, luminescence images stored in step 12 are displayed on the output device 150g in false color, animation, etc., or alternatively, superposition images of luminescence images stored in step 12 and illumination images stored in step 17 are generated, and the generated superposition images are displayed on the output device 150g in false color, animation, etc. (step 18).

Then, through the process of the measurement region determination portion 150a10, at least one measurement region (for example, light-emitting region (for example, a measurement sample 10 or a specific part in a measurement sample 10)) is determined in the image displayed in step 18 by the user (step 19). In this regard, in step 19, a measurement region may be determined automatically based on a threshold of luminescence, or based on an S/N of the image.

When a measurement region is determined, a luminescence amount or a luminescence intensity of the determined measurement region in the respective luminescence images are measured or computed through the process of the luminescence measurement portion 150a11, and displayed in time series with a graphical representation on the TV monitor 150g (step 20). Thereby, the user can check the variation with time of a luminescence amount or a luminescence intensity.

Then, based on plural luminescence amounts and/or plural luminescence intensities measured in step 20, through the process of induction/inhibition judgment portion 150a12, it is analyzed whether the compound added in step 2 has induced or inhibited an expression or a localization of luminescent protein introduced into the measurement sample 10 (step 21), and also, the analysis result in step 21 is displayed on the TV monitor 150g.

As understood from the above-mentioned example of the processes, for instance, in carrying out a reporter assay in a cell, according to the luminescence measuring apparatus 1, it becomes possible to almost automatically perform a series of operations or processes of addition of a compound, measurement of a variation in a luminescence amount, a judgment of an induction or an inhibition of gene transcription by the compound. Also, through defining an observation region and setting a measurement region, it can be avoided to execute a luminescence measurement for samples in which gene transfer and/or expression are not successful or to make data of such samples reflect in the result, and therefore it becomes possible to investigate the influence on biological samples of a compound more properly.

Further, the luminescence measuring apparatus 1 is capable of performing a kinetics measurement and an end-point measurement with the single information processing device 150, while easily changing between the end point measurement and the kinetics measurement. In addition, a kinetics measurement immediately after a reagent addition is possible by using the dispensing device 110. The series of processes performed with the information processing device 150 may be made as a program.

Furthermore, according to the luminescence measuring apparatus 1, when a gene for GFP or YFP, is introduced into a measurement sample 10, a fluorescence image may be additionally captured in the capturing of an illumination image. In that case, the exchange of color filters may be done in the capturing of the illumination image,

For investigating the usefulness of the present invention, the following experiments were carried out. In this regard, it should be understood that the following examples are to illustrate the usefulness of the present invention and are not intended to limit the scopes of the present inventions.

### Example

In this example, using an embodiment of the inventive luminescence measuring apparatus, a luminescence, induced by a reagent stimulus, in a certain cell in a plurality of HeLa cells into which a luciferase gene was introduced was temporally observed.

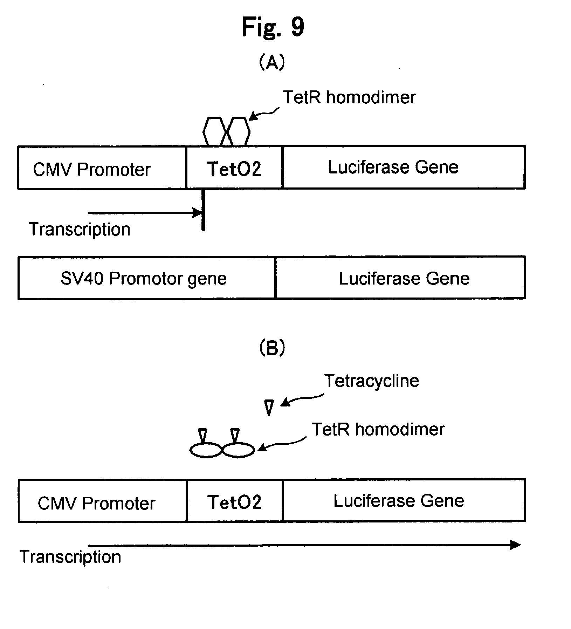

For the sample, HeLa cells in which a vector, "pcDNA6/TR (obtained from In vitro gene co.)" constantly expressing a tetracycline repressor (TetR), and a plasmid including a luciferase gene connected with an expression vector "pcDNA4/TO (obtained from In vitro gene co.)" having a tetracycline operator (TetO2) had been genetically transferred were used. In the cells into which these two genes are introduced, as schematically shown in Fig. 9A, TetRs are first expressed with the vector (pcDNA6/TR) for TetR, and then, the TetRs form a homodimer, which combines with a TetO2 gene region, thereby suppressing the transcription of the luciferase gene connected to a Tet02 region. However, as schematically shown in Fig. 9B, tetracycline, when it is given to the cells (drug stimulus), induces a conformation change of the TetR homodimer, leading to the detachment of the TetR homodimer from the TetO2 region, so that the transcription of the luciferase gene and the expression of luciferase proteins will be induced. Thus, in this experimental example, in a cell into which the above-mentioned genes were introduced, it was observed that a stimulus with tetracycline caused the expression of luciferase and a luminescence phenomenon within the cell.

The experimental operations were carried out in the following procedures.
(1) There was prepared a sample of HeLa cells in which a vector "pcDNA6/TR" (from In vitro gene co.) constantly expressing TetR and a plasmid including a luciferase gene connected with an expression vector "pcDNA4/TO" (from In vitro gene co.) having Tet02 have been co-expressed. For a culture medium, D-MEM culture medium containing 10mM HEPES, provided with 1mM luciferin, was used.
(2) After a laboratory dish 11 into which the HeLa cell of (1) had been put was laid on the stage 30 and the luminescence measuring apparatus 1 was booted, tetracycline is added to the HeLa cell, and then illumination images and luminescence images were captured for every predetermined time with a predetermined interval during a predetermined period, and stored. The exposure time in the capturing of a luminescence image was set to 1 minute.

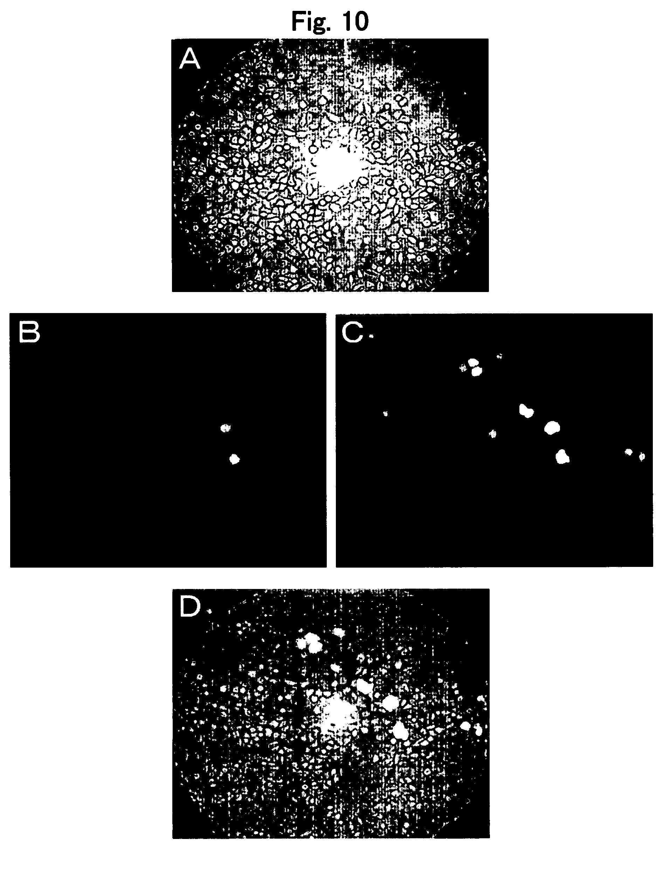

   Fig. 10A, B, and C are an illumination image of the HeLa cell before adding tetracycline; a luminescence image of the HeLa cell captured after 9 hours passed from the addition of tetracycline; and a luminescence image of the HeLa cell captured one more hour after, respectively. Fig. 10D is an image obtained by superposing the illumination image of Fig. 10A, and the luminescence image of Fig. 10C, displayed with a portion being enlarged. In this regard, in forming the superposition image, the brightness of an illumination image and a luminescence image were adjusted for optimizing the superposition image. As understood from the images, positions of luciferase being luminescent are observable in a clear image through superposing an illumination image and a luminescence image, so that it becomes possible to find a cell containing a luciferase gene easily.
(3) Furthermore, by means of the luminescence measuring apparatus 1, a measurement region for measuring a luminescence intensity was determined in a superposition image of an illumination image and a luminescence image, and a variation with time of the luminescence intensity in the measurement region was monitored.

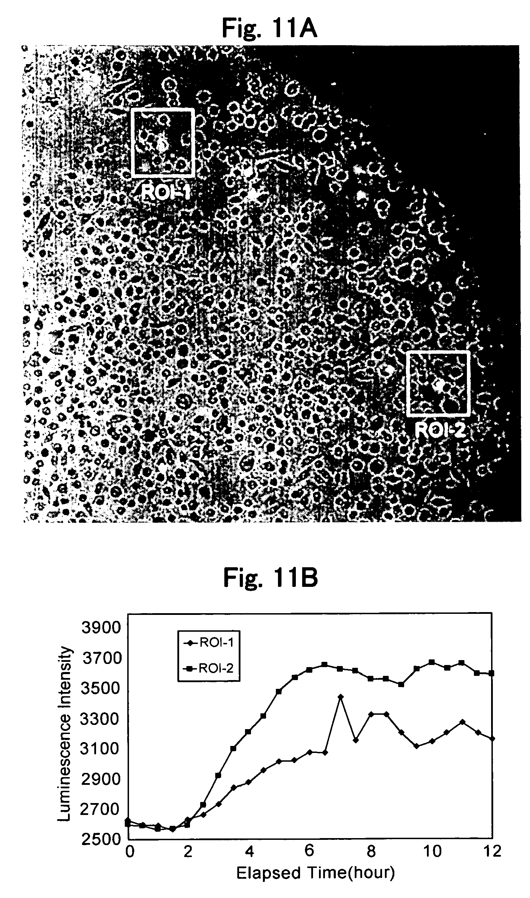

Fig. 11A is the superposition image of an illumination image and a luminescence image, where measurement regions ROI-1 and ROI-2 are determined. Further, Fig. 11B shows graphs of variations with time of the luminescence intensities computed for the respective measurement regions ROI-1 and ROI-2. As shown in Fig. 11B, luminescence was found 2 hours after adding tetracycline, reaching a plateau in 6 to 7 hours. Thus, in accordance with the present invention, a variation with time of a luminescence phenomenon could be measured by specifying the position of the luciferase being luminescent and tracking it in time series.

As above, the inventive luminescence measuring apparatus and luminescence measurement method are useful in measuring a luminescence amount and a luminescence intensities from a living measurement sample, and preferably employable in various fields, such as biotechnology, medicine manufacture, and medical treatment.

Although the present invention has been described in detail with respect to particular embodiments, it will be apparent for those skilled in the art that other various embodiments are possible within the scopes of the present invention.

## Claims

1. A luminescence measuring apparatus for measuring a luminescence amount or a luminescence intensity from plural living biological samples into which a gene expressing a luminescent protein has been introduced, **characterized in that** the apparatus comprises an image acquisition portion that acquires a luminescence image including at least one part of the biological samples; a measurement region determination portion that determines at least one measurement region in the luminescence image acquired by the image acquisition portion; a luminescence measurement portion that measures, when the at least one measurement region is determined by the measurement region determination portion, a luminescence amount or a luminescence intensity in the at least one measurement region based on the luminescence image acquired by the image acquisition portion; thereby measuring the luminescence amount or luminescence intensity individually by the biological sample(s) included in the at least one measurement region.

2. The apparatus of Claim 1, further comprising an illuminating portion that irradiates light on the biological samples, wherein the image acquisition portion acquires an illumination image including the biological samples on which the light is irradiated by the illuminating portion; and the measurement region determination portion generates a superposition image by superposing the luminescence image and the illumination image acquired by the image acquisition portion, and determines the at least one measurement region in the superposition image.

3. The apparatus of Claim 2, wherein the image acquisition portion includes an optical microscope and a microscopic image capturing device; the luminescence image being a luminescence microscopic image obtained by observation of light emitted owing to a luminescence phenomenon in the biological samples under the optical microscope and the illumination image being a transmitted light microscopic image obtained in a transmitted light observation under the optical microscope with the irradiated light of the illuminating portion, wherein the microscopic image capturing device has a light receiving surface, and the optical microscope includes an objective and a lens assembly that form an image of the biological samples on the light receiving surface of the microscopic image capturing device, wherein a square value of a ratio of a numerical aperture of the objective to a magnification power of the image of the samples projected on the light receiving surface is 0.01 or above.

4. The apparatus of Claim 1, comprising a control portion that controls the image acquisition portion to repetitively perform the image acquisition; and, when the at least one measurement region is determined by the measurement region determination portion, the luminescence measurement portion measures, based upon a plurality of luminescence images acquired by the repetitive operation of the image acquisition portion by the control portion, the luminescence amount or luminescence intensity from the at least one determined measurement region in each luminescence image.

5. The apparatus of Claim 1, **characterized in that** the apparatus includes a stimulus application device which stimulates the biological samples.

6. The apparatus of Claim 5, **characterized in that** the stimulus application device is at least either one selected from a group consisting of a compound addition device that adds a compound to the biological samples; a temperature adjusting device that adjusts a temperature of the biological samples and a gas supplying device that supplies gas to the biological samples.

7. The apparatus of Claim 1, **characterized in that** the apparatus comprises a compound addition device that adds a predetermined compound to the biological samples; and a luminescent protein expression judgment portion that judges whether or not the predetermined compound caused an expression or a localization of the luminescent protein or their inhibition based on the luminescence amount or luminescence intensity measured by the luminescence measurement portion.

8. The apparatus of Claim 7, **characterized in that** the luminescent protein expression judgment portion comprises a parameter computing portion that computes a predetermined parameter based on the luminescence amount or luminescence intensity measured by the luminescence measurement portion; and, a parameter-threshold judging portion that judges whether or not the predetermined compound caused an expression or a localization of the luminescent protein or their inhibition based on the predetermined parameter computed by the parameter computing portion.

9. The apparatus of Claim 7, **characterized in that** the apparatus further comprises a control portion that controls at least one of the compound addition device and the image acquisition portion, and commands timings of a compound addition and an image capturing.

10. An information processing device for a luminescence measurement, the device computing a luminescence amount or luminescence intensity from plural living biological samples into which a gene expressing a luminescent protein has been introduced based upon a luminescence image of the living biological samples, **characterized in that** the device comprises a measurement region determination portion that determines at least one measurement region in a previously acquired luminescence image including an image of the biological samples; and a luminescence measurement portion that measures, based on the luminescence image of the living biological samples, a luminescence amount or a luminescence intensity of the at least one measurement region in the previously acquired luminescence image.

11. The apparatus of Claim 1 or 10, **characterized in that** the biological samples are ones selected from a group consisting of biological tissues, cells and biological individuals.

12. A method of measuring a luminescence amount or a luminescence intensity from plural living biological samples into which a gene expressing a luminescent protein has been introduced, **characterized in that** the method comprises steps of:
acquiring a luminescence image including at least one part of the biological samples;
determining at least one measurement region in the luminescence image; and
measuring the luminescence amount or a luminescence intensity in the at least one determined measurement region based on the luminescence image;
thereby measuring the luminescence amount or luminescence intensity individually by the biological sample(s) included in the at least one measurement region.

13. The method of Claim 12, further comprising steps of:
irradiating light on the biological samples with an illuminating device;
acquiring an illumination image including the biological samples on which the light is irradiated by the illuminating device;
wherein in the step of determining at least one measurement region in the luminescence image, a superposition image is generated by superposing the luminescence image and the illumination image acquired by the image acquisition portion, and the at least one measurement region is determined in the superposition image.

14. The method of claim 12, **characterized in that** the luminescence image is a luminescence microscopic image obtained by observation of light emitted owing to a luminescence phenomenon in the biological samples under an optical microscope by means of the optical microscope and an microscopic image capturing device and; and the illumination image is a transmitted light microscopic image obtained in a transmitted light observation under the optical microscope by means of the optical microscope and microscopic image capturing device; wherein the microscopic image capturing device has a light receiving surface, and the optical microscope includes an objective and a lens assembly that form an image of the biological samples on the light receiving surface of the microscopic image capturing device, wherein a square value of a ratio of a numerical aperture of the objective to a magnification power of the image of the samples projected on the light receiving surface is 0.01 or above.

15. The method of Claim 12, **characterized in that** the method comprises repetitively performing the step of acquiring a luminescence image including at least one part of the biological samples to acquire a plurality of luminescence images; and, measuring the luminescence amount or luminescence intensity from the at least one determined measurement region in each luminescence image based upon the plurality of luminescence images in the step of measuring the luminescence amount or luminescence intensity in the at least one determined measurement region.

16. The method of Claim 12, **characterized in that** the method comprises a step of stimulating the biological samples prior to the step of acquiring the luminescence image.

17. The method of Claim 16, **characterized in that** the stimulus applied to the biological samples in the step of stimulating the biological samples is at least one stimulus selected from a group consisting of a reagent stimulus, a gas stimulus, an electric stimulus and a heat stimulus.

18. The method of Claim 12, **characterized in that** the method further comprises the steps of: adding a predetermined compound to the biological samples prior to the step of acquiring the luminescence image; and judging whether or not the predetermined compound caused an expression or a localization of the luminescent protein or their inhibition based on the luminescence amount or luminescence intensity measured in the step of measuring the luminescence amount or luminescence intensity in the at least one determined measurement region.

19. The method of claim 18, **characterized in that** the step of judging whether or not the predetermined compound caused an expression or a localization of the luminescent protein or their inhibition comprises steps of: computing a predetermined parameter based on the luminescence amount or luminescence intensity; and judging whether or not the predetermined compound caused an expression or a localization of the luminescent protein or their inhibition based on the computed predetermined parameter.

20. The method of Claim 18, **characterized in that** the luminescence image is acquired according to the timing of addition of the compound.

21. The method of Claim 12, wherein the biological samples are ones selected from a group consisting of biological tissues, cells and biological individuals.

22. A computer program for controlling operations of a luminescence measuring apparatus for measuring a luminescence amount or a luminescence intensity from plural living biological samples into which a gene expressing a luminescent protein has been introduced, **characterized in that** the program makes a computer execute procedures of:
acquiring a luminescence image including at least one part of the biological samples by operating an image acquisition portion that acquires a luminescence image including at least one part of the biological samples;
determining at least one measurement region in the luminescence image acquired by the image acquisition portion; and
measuring the luminescence amount or luminescence intensity in the at least one determined measurement region based on the luminescence image acquired by the image acquisition portion;
thereby measuring the luminescence amount or luminescence intensity individually by the biological sample(s) included in the at least one measurement region.

23. The program of Claim 22, further comprising procedures of:
irradiating light on the biological samples by operating an illuminating portion;
acquiring an illumination image including the biological samples on which the light is irradiated by the illuminating portion by operating the image acquisition portion;
wherein the procedure of determining the at least one measurement region in the luminescence image includes generating a superposition image by superposing the luminescence image and the illumination image acquired by the image acquisition portion, and determining the at least one measurement region in the superposition image.

24. The computer program of Claim 22, **characterized in that** the luminescence image is a luminescence microscopic image obtained by observation of light emitted owing to a luminescence phenomenon in the biological samples under an optical microscope by means of the optical microscope and an microscopic image capturing device; and the illumination image is a transmitted light microscopic image obtained in a transmitted light observation under the optical microscope by means of the optical microscope and the microscopic image capturing device, wherein the microscopic image capturing device has a light receiving surface, and the optical microscope includes an objective and a lens assembly that form an image of the biological samples on the light receiving surface of the microscopic image capturing device, wherein a square value of a ratio of a numerical aperture of the objective to a magnification power of the image of the samples projected on the light receiving surface is 0.01 or above.

25. The computer program of Claim 22, **characterized in that** the program comprises repetitively performing the procedure of acquiring a luminescence image including at least one part of the biological samples to acquire a plurality of luminescence images; and computing the luminescence amount or luminescence intensity from the at least one determined measurement region in each luminescence image based upon the plurality of luminescence images in the procedure of computing the luminescence amount or luminescence intensity in the at least one determined measurement region.

26. The computer program of Claim 22, **characterized in that** the program comprises executing a procedure of stimulating the biological samples prior to the procedure of acquiring the illumination image.

27. The computer program of Claim 26, **characterized in that** the stimulus applied to the biological samples in the procedure of stimulating the biological samples is at least one stimulus selected from a group consisting of a reagent stimulus, a gas stimulus, an electric stimulus and a heat stimulus.

28. The computer program of Claim 22, **characterized in that** the program further comprises procedures of: adding a predetermined compound to the biological samples by operating a compound addition device that adds a predetermined compound to the biological samples prior to the procedure of acquiring the luminescence image; and judging whether or not the predetermined compound caused an expression or a localization of the luminescent protein or their inhibition based on the luminescence amount or luminescence intensity computed in the procedure of computing the luminescence amount or luminescence intensity in the at least one determined measurement region.

29. The computer program of claim 28, **characterized in that** the procedure of judging whether or not the predetermined compound caused an expression or a localization of the luminescent protein or their inhibition further comprises procedures of: computing a predetermined parameter based on the luminescence amount or luminescence intensity; and judging whether or not the predetermined compound caused an expression or a localization of the luminescent protein or their inhibition based on the computed predetermined parameter.

30. A computer program for a luminescence measurement of computing a luminescence amount or a luminescence intensity from plural living biological samples into which a gene expressing a luminescent protein has been introduced based upon a luminescence image of the living biological samples, **characterized in that** the program makes a computer execute procedures of: determining at least one measurement region in a previously acquired luminescence image including an image of the biological samples; and measuring a luminescence amount or a luminescence intensity of the at least one measurement region in the previously acquired luminescence image based on the luminescence image of the living biological samples.

31. The program of Claim 22 or 30, **characterized in that** the biological samples are ones selected from a group consisting of biological tissues, cells and biological individuals.
